(19) Europäisches Patentamt / European Patent Office / Office européen des brevets

(11) **EP 1 481 946 B1**

(12) **EUROPEAN PATENT SPECIFICATION**

(45) Date of publication and mention of the grant of the patent:
**13.07.2016 Bulletin 2016/28**

(21) Application number: **03705093.7**

(22) Date of filing: **13.02.2003**

(51) Int Cl.:
*C01B 31/02* [(2006.01)]

(86) International application number:
**PCT/JP2003/001468**

(87) International publication number:
**WO 2003/068676 (21.08.2003 Gazette 2003/34)**

(54) **PROCESS FOR PRODUCING SINGLE-WALLED CARBON NANOTUBE, SINGLE-WALLED CARBON NANOTUBE, AND COMPOSITION CONTAINING SINGLE-WALLED CARBON NANOTUBE**

VERFAHREN ZUR HERSTELLUNG VON EINWANDIGEM KOHLENSTOFFNANORÖHRCHEN, EINWANDIGES KOHLENSTOFFNANORÖHRCHEN UND EINWANDIGES KOHLENSTOFFNANORÖHRCHEN ENTHALTENDE ZUSAMMENSETZUNG

PROCEDE DE PRODUCTION DE NANOTUBES DE CARBONE A PAROI SIMPLE, NANOTUBES AINSI PRODUITS, ET COMPOSITION LES CONTENANT

(84) Designated Contracting States:
**AT BE BG CH CY CZ DE DK EE ES FI FR GB GR HU IE IT LI LU MC NL PT SE SI SK TR**

(30) Priority: **13.02.2002 JP 2002034758**
**25.10.2002 JP 2002311111**

(43) Date of publication of application:
**01.12.2004 Bulletin 2004/49**

(73) Proprietors:
• **TOUDAI TLO, LTD.**
**Tokyo 113-0033 (JP)**
• **TORAY INDUSTRIES, INC.**
**Tokyo 103-8666 (JP)**

(72) Inventors:
• **MARUYAMA, Shigeo**
**Setagaya-ku , Tokyo 157-0066 Japan (JP)**
• **YOSHIKAWA, Masahito**
**Nagoya-shi, Aichi 458-0033 (JP)**

(74) Representative: **Miller Sturt Kenyon**
**9 John Street**
**London WC1N 2ES (GB)**

(56) References cited:
| | |
|---|---|
| WO-A1-00/17102 | WO-A1-00/17102 |
| WO-A1-00/73205 | WO-A1-00/73205 |
| JP-A- 5 116 923 | JP-A- 8 100 328 |
| JP-A- 10 203 810 | JP-A- 10 273 308 |
| JP-A- 11 011 917 | JP-A- 2003 081 617 |
| US-B1- 6 495 258 | |

• LIBERA J ET AL: "Hydrothermal synthesis of graphite tubes using Ni catalyst" CARBON, vol. 39, no. 9, August 2001 (2001-08), pages 1307-1318, XP004319974 ISSN: 0008-6223
• MARUYAMA S. ET AL.: 'Low-temperature of synthesis high-purity single-walled carbon nanotubes from alcohol' CHEMICAL PHYSICS LETTERS vol. 360, 10 June 2002, pages 229 - 234, XP002967770
• RAO A.M. ET AL.: 'Diameter-selective raman scattering from vibrational modes in carbon nanotubes' SCIENCE vol. 275, 10 January 1997, pages 187 - 191, XP002967771

**Description**

FIELD OF THE INVENTION

This invention relates to a process for producing a single-walled carbon nanotube, a single-walled carbon nanotube obtained therefrom, and a composition containing single-walled carbon nanotube, and to be more concrete, the invention relates to a process for producing a high quality single-walled carbon nanotube with few defects, a single-walled carbon nanotube obtained therefrom, and a composition containing single-walled carbon nanotube.

BACKGROUND ART

Recently, research and development of carbon nanotubes (hereafter, simply abbreviated to "CNTs") have extensively been carried out. Among these CNTs, especially, the research and development on single-walled CNTs are strongly desired for the reason that the characteristics, for example, its shape, electronic property, adsorption characteristic, mechanical characteristic, or the like are applicable to wide ranges of use.
Conventionally, an arc discharge method, a laser ablation method, and a CVD method are known as typical processes for producing CNT.
Among these, the arc discharge method is a technique for yielding multi-walled CNT in sediment on a cathode by carrying out arc discharge across carbon bars in an atmosphere of argon or hydrogen at pressure lower than the air atmosphere. In this case, if the arc discharge is carried out with a catalyst such as Ni/Y mixed in the carbon bars, single-walled CNTs can be yielded in a vessel. This arc discharge method has the advantage of being able to yield relatively good quality CNTs with few defects, but on the other hand, the method has such disadvantages as i) yielding amorphous carbon at the same time, ii) cost is high, and iii) being unsuitable for mass-production, etc.
The laser ablation method is used for producing CNTs by irradiating carbon mixed with catalysts such as Ni/Co with strong pulsed light pulses, such as YAG laser light, in a high-temperature atmosphere of 900 to 1300°C. This technique has the advantage of being able to obtain relatively high purity CNTs and also to control the tube diameter by means of altering the conditions thereof, but yields insufficiently quantities, and is therefore considered as inappropriate for producing CNT in an industrial scale.
The CVD method (Chemical Vapor Deposition method) is used for yielding CNTs by bringing a carbonic compound as a carbon source into contact with catalytic metal particle at 500 to 1200°C. The method permits variations in the kinds of metal catalysts and arrangements thereof, and kinds of the carbon compounds, and permits the synthesis of single-walled or multi-walled CNTs by changing the conditions. Moreover, this method permits to obtain multi-walled CNTs aligned perpendicular to the substrate surface to be obtained by arranging the catalyst on the substrate.
As an application of this CVD method, Dai et al. have disclosed a method for obtaining single-walled CNTs by using carbon monoxide as a raw material and iron-carbonyl as a catalyst (Chemical Physics Letters, 260, 471-475, (1996)). Since this technique enables the raw material to be supplied as a gas, this technique is most suitable for mass synthesis, and has been shown to yield a relatively high percentage of single-walled CNTs, while the synthesized single-walled CNTs have the disadvantage of generally having many defects. Moreover, a high temperature at 900°C or higher is necessary to yield the single-walled CNTs. There is also a safety issue because highly toxic carbon monoxide and iron carbonyl are used. Concerning a technique for producing single-walled CNTs by the CVD method, many other techniques are disclosed, but actual trial processes have proved that any of them has a problem of a low percentage of single-walled CNTs in CNTs, not exceeding 20%.

DISCLOSURE OF THE INVENTION

The purpose of the present invention is to provide a process for producing single-walled carbon nanotubes which contain little or almost no foreign substances such as multi-walled carbon nanotubes, amorphous carbon non-particles and having satisfactory quality with few defects.
Another object of the present invention is to provide a process for safe mass yield of high quality single-walled carbon nanotubes with few defects.
Further, another objection of the present invention is to provide high quality single-walled carbon nanotubes with few defects and a composition containing single-walled carbon nanotubes.
According to the invention, there is provided a process for producing single-walled carbon nanotubes as defined in claim 1.
By such a process of the present invention, it is possible to produce single-walled carbon nanotubes which contain few foreign substances such as multi-walled carbon nanotubes, amorphous carbon, and carbon nano-particles other than the single-walled carbon nanotubes and have high quality with few defects.
According to another aspect of the invention, there is provided a composition as defined in claim 36.

BRIEF DESCRIPTION OF THE DRAWINGS

Fig. 1 shows an SEM image of the single-walled carbon nanotubes obtained from the embodiment 1.

Fig.2 shows a TEM image of the single-walled carbon nanotubes obtained from the embodiment 1.

Fig.3 shows a TEM image of the single-walled carbon nanotubes obtained from the embodiment 1.

Fig.4 shows a result of a Raman spectrum analysis (488nm) of the single-walled carbon nanotubes A-4 obtained from the embodiment 1.

Fig.5 shows a result of a Raman spectra analysis (488) of the single-walled carbon nanotubes A-1 to A-5 (488nm) obtained from the embodiment 1.

Fig.6 shows the diameter distribution of the single-walled carbon nanotubes associated with temperature change obtained from the Raman spectra analysis (488nm) of the single-walled carbon nanotubes A-1 to A-5 of the embodiment 1.

Fig.7 shows a result of the Raman spectra analysis (488nm) of the single-walled carbon nanotubes A-6 to A-8 obtained from the embodiment 2.

Fig.8 shows diameter distribution of the single-walled carbon nanotubes associated with change in temperature, obtained from the Raman spectra analysis (488nm) of the single-walled carbon nanotubes A-6 to A-8 of the embodiment 2.

Fig.9 shows the result of the Raman spectrum analysis (488nm) of the single-walled carbon nanotubes A-9 in the embodiment 3.

Fig.10 shows the diameter distribution of the single-walled carbon nanotubes obtained from the Raman spectrum analysis (488nm) about the single-walled carbon nanotubes A-9 in the embodiment 3.

Fig.11 shows the Raman spectra analysis (488nm) about the single-walled carbon nanotubes A-11 to A-13 of the embodiment 5.

Fig.12 shows the diameter distribution of the single-walled carbon nanotubes, obtained from the Raman spectra analysis (488nm) about the single-walled carbon nanotubes A11 to A13 of the embodiment 5.

Fig.13 shows the result of the Raman spectra analysis (488nm) of the single-walled carbon nanotubes A-14 to A-16 of the embodiment 6.

Fig.14 shows the diameter distribution of the single-walled carbon nanotubes obtained from the Raman spectra analysis (488nm) about the single-walled carbon nanotubes A14 to A16 of the embodiment 6.

Fig.15 shows the results of the Raman spectra analysis with the excitation wavelengths of 488nm, 514nm, and 633nm of the single-walled carbon nanotubes A-4 produced in the embodiment 1.

Fig.16 explains how to read the measurement results of the thermal analysis (TG, DTA, DTG).

Fig.17 shows TG of the single-walled carbon nanotubes synthesized in the embodiment 7.

Fig.18 shows DTG of the single-walled carbon nanotubes synthesized in the embodiment 7.

Fig.19 shows the result of the Raman spectra analysis (488nm) of the single-walled carbon nanotubes synthesized in the embodiment 7.

Fig.20 shows the result (RBM) of the Raman spectra analysis (488nm) of the single-walled carbon nanotubes synthesized in the embodiment 7.

Fig.21 shows a time dependence of the yield of the single-walled carbon nanotubes in the embodiments 7 and 8.

Fig.22 shows TG of the single-walled carbon nanotubes synthesized in the embodiment 9.

Fig.23 shows DTG of the single-walled carbon nanotubes synthesized in the embodiment 9.

Fig. 24 shows TG and DTG of the single-walled carbon nanotubes synthesized in the embodiment 12.

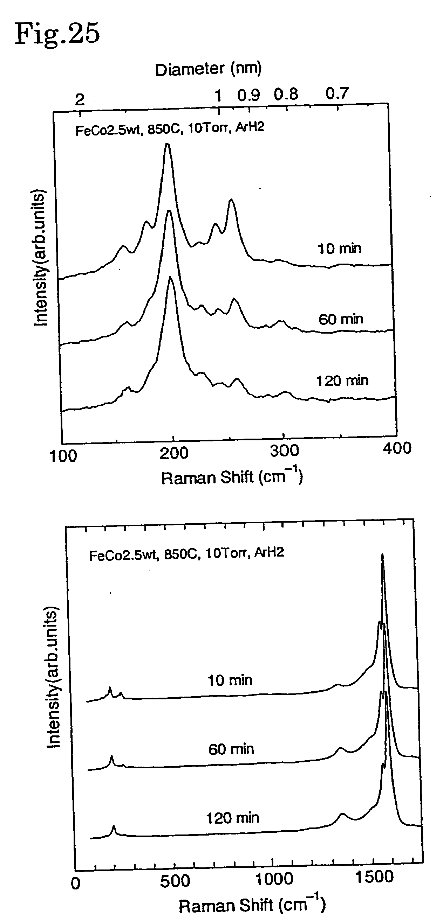

Fig.25 shows the result of the Raman spectra analysis (488nm) of the single walled carbon nanotubes synthesized in the embodiment 12.

BEST MODES OF EMBODIMENTS FOR CARRYING OUT THE INVENTION

The basic constitution of the process for producing single-walled nanotubes according to the present invention is a carbon source comprising an oxygenic organic compound or an atmosphere of a mixture of an oxygenic compound and a carbonic compound is brought into contact with a catalyst with heating to yield single-walled carbon nanotubes. Through such a process as the above, the single-walled carbon nanotubes can be obtained in good quality and with few defects.

In the present invention, the carbon source comprising the oxygenic organic compound or the mixture of the oxygenic compound and the carbonic compound is used as a raw material. The former raw material is a mono-molecular compound having both of oxygen and carbon, while the latter raw material is a mixture of two or more molecules comprising oxygenic compounds and carbonic compounds.

Although carbon monoxide is a compound containing oxygen and carbon in the molecule, it is not an organic material, therefore, it doesn't include in the organic materials having oxygen in one molecule. Moreover, since carbon monoxide has a safety problem, it is not suitable for the raw material to be used for the present invention. However, it does not matter that carbon monoxide (CO) is produced as an intermediate product.

An alcohol and/or an ether is used as the oxygenic organic compound. Although the kinds of alcohols are not specifically limited, alcohol having 1 to 10 atoms of carbon is preferably used because it is easy to gasify. Moreover, the alcohols are not limited to those having only one piece of OH group, but they may have two pieces or more. Although the ethers are not limited to special kinds, ether having 1 to 10 atoms of carbon is preferably used because it is easy to gasify. Moreover, the ethers are not limited to those having only one piece of O group, but they may have two pieces or more.

As usable alcohols, for example, methanol, ethanaol, n-propanol, iso-propanaol, iso-propanal, n-butanol, iso-butanol, sec-butanol, tert-butanol, n-pentanol, iso-pentanol, n-amylalcohol, iso-amylalcohol, n-hexanol, n-butanol, n-octanol, n-nonanol, n-decanol, and the like can be mentioned, but the alcohols are not limited to these.

Moreover, as ethers, for example, dimethyl ether, diethyl ether, methyl ether, and the like can be mentioned, but the ethers are not limited to these.

Alcohols and ethers also depends on the catalyst to be used in the production process of the present invention, but at least one kind among methanol, ethanol, n-propanol is preferably used.

The oxygenic compound of a "mixture of an oxygenic compound and a carbonic compound" in the present invention is as above mentioned, and the carbonic compound is exemplified as hydrocarbons such as methane, ethane, ethylene, acetylene, hexane, benzene, xylene, and toluene. It may contain other atoms in addition to carbon as pyridine and amine. As examples of the mixtures, mixtures of hydrocarbons such as acetylene and water, or NOX, SOX, and hydrocarbons such as acetylene can be mentioned.

The carbon source comprising the oxygenic organic compound, and the mixture of the oxygenic compound and the carbonic compound as mentioned above are supplied as gaseous atmospheres when they are supplied to a reaction area as raw materials. In the case of liquid compounds, such an atmosphere like this can be produced by using their vapors, and the flows can be exhausted by a vacuum pump or the like, and also the atmosphere can be produced by using a supporting material gas.

In the present invention, the catalyst is arranged so as to come into contact with the atmosphere of the above-mentioned raw materials in the reaction area with heating. The catalyst may be laid at rest in the reaction area, or it may be made to flow so as to be brought into contact with the atmospheric gases of the raw materials. The catalyst is laid at rest when producing single-walled carbon nanotubes in batch. Moreover, when producing the single-walled carbon nanotubes continuously, the catalyst is preferably made to flow. Here, the "flowing" means to supply the catalyst to the reaction area in order to let the catalyst yield the single-walled carbon nanotubes, and thereafter, remove the catalyst having yielded the single-walled carbon nanotubes from the reaction area, namely, the "flowing" means to let the catalyst be present so that it is moved in the reaction area.

The atmosphere of the source is brought into contact with the catalyst with heating to yield the single-walled carbon nanotubes, and a lower limit of the heating temperature depends on the above-mentioned atmosphere and the catalyst, but is 500°C, preferably 550°C, more preferably 650°C. Namely, the heating temperature is controlled to be 500°C or higher, preferably 550°C or higher, more preferably 650°C or higher. According to the production process of this invention, the single-walled carbon nanotubes can be synthesized at such a relatively low heating temperature. Therefore, even a relatively low heat-resisting material, for example, even a wired silicon substrate can be synthesized the single-walled carbon nanotubes and wiring via the single-walled carbon nanotubes on the substrate.

An upper limit of the heating temperatures depends on the above-mentioned atmosphere of the source gas and the catalyst, but is 1500°C, preferably 1000°C, more preferably 900°C. Namely, the heating temperature is controlled to be 1500°C or lower, preferably 1000°C or lower, more preferably 900°C or lower.

Moreover, the diameter of the yielded single-walled carbon nanotubes can be controlled by controlling the heating temperature. Although the diameter depends also on the catalyst or the like to be used, the obtained single-walled carbon nanotubes can generally be reduced in diameter if the heating temperature is lowered. On the contrary, the diameter can be increased if the heating temperature is raised. The smaller the diameter is, the more excellent the single-walled carbon nanotubes are in an electron discharge characteristic and the easier to obtain an additional effect in the case of using them as a composite material. Since the conventionally known process could yield the single-walled carbon nanotubes only at high temperatures, catalyst particles agglomerate and become large. As a result, it has been impossible to obtain single-walled carbon nanotubes with small diameter.

By the production process of the present invention, it is possible to synthesize the single-walled carbon nanotubes at a relatively low temperature by using the carbon source comprising the oxygenic compound, preferably oxygenic organic material such as alcohol and/or ether as the raw material. Especially, it is possible to synthesize single-walled carbon nanotubes having a small diameter. Moreover, the production process of the present invention has the advantage of being able to inhibit yielding carbon nanotubes with large diameter.

As the catalysts to be used for the present invention, any of the known catalysts which have been conventionally used for synthesizing carbon nanotubes can be used. For example, the catalysts which have been conventionally used for typical production processes of carbon nanotubes, namely, (1) an arc discharge method, (2) a laser ablation method, and (3) a CVD method, can be used. More concretely, the one which a metal catalyst is supported on a supporting material can be used.

These metal catalysts can be exemplified as Fe, Co, Ni, Mo, Pt, Pd, Rh, Ir, Y, La, Ce, Pr, Nd, Gd, Tb, Dy, Ho, Er, Lu, and the like. Preferably, Fe, Co, Ni, Mo, Pt, Pd, Rh, Ir, Y, as well as Ce, Pr, Nd, Gd, Tb, Dy, Ho, Er, Lu and the like. Moreover, combinations of these, for example, Fe/Co, Ni/Co, Fe/Mo, Co/Mo, and the like; combinations of oxides of the above metals and the above metals; and combinations of oxides of the above metals can be used.

As supporting materials of the metal catalysts, silica, alumina, zeolite, MgO, zirconia, titania can be used. Of course, in addition to above materials, other materials can be used as supporting materials. For example, a wired silicon substrate is used as a supporting material and a suitable metal catalyst is made to be supported on the desired part of the silicon substrate, and thereby, synthesis of single-walled carbon nanotubes and wiring by the synthesized single-walled carbon nanotubes on the substrate can be realized.

As a process for supporting a metal on a supporting material, there is a process as follows while it does not mean to be limited to the process. A metal salt is dissolved in a solvent such as water or alcohol and the supporting material is impregnated therein, with mixing operation such as stirring according to the necessity, and the solvent is then dried to obtain the metal-supported material. The supported salt in the dried body is decomposed by heating and the dried body becomes the catalyst to be used for the present invention. The heating conditions are not specially limited, but the temperature should not be lower than the decomposition temperature of the metallic salt. The atmosphere of heating is also not specially limited, but is preferably carried out in an active gas, a reducing gas, an inert gas containing reducing gas, or in a vacuum. More preferably, the heating is carried out in an inert gas or in an inert gas containing a reducing gas.

The supporting material is not specially limited as far as it is resistant to a reaction temperature, but MgO and zeolite are preferably used. MgO is preferred because it is easily decomposed later and the catalyst supporting material is easily removable by acid. Moreover, although the reason is not clear, zeolite is preferable because it gives a high yield of single-walled carbon nanotubes. Especially, zeolite can increase yield of carbon nanotubes compared with other supporting materials.

Zeolite in the present invention consists of the crystalline inorganic oxide having molecular-sized minute hole diameters. Here, the molecular size is within the range of molecules existing in the world, and generally means a range of 0.2 nm to 2 nm. More specifically, the crystalline inorganic oxide means a crystalline micro porous material consisted of crystalline silicate, crystalline aluminosilicate, crystalline metallosilicate, crystalline metallo aluminisilicate, crystalline alumino-phosphate, crystalline metallo-alumino-phosphate or the like.

As crystalline silicate, crystalline aluminosilicate, crystalline metallosilicate, crystalline metallo aluminisilicate, crystalline alumino-phosphate, and crystalline metallo-alumino-phosphate, their kinds are not particularly limited, but for example, crystalline inorganic porous substances having the structures reported on (Atlas of Zeolite Structure types (W. M. Meier, D. H. Olson, Ch. Baerlocher, Zeolites, 17(1/2), 1996) can be mentioned.

The zeolites used in the present invention are not limited to those reported on the literature, but include zeolites having new structures synthesized one after another recently. Preferable structures are those of FAU-type, MFI-type, MOR-type, BEA type, LTL-type, LTA-type, and FER-type which are easily available, but the structures are not limited to these. Because they are easily available, as crystalline aluminosilicate, FAU-type, MFI-type, MOR-type, BEA-type, LTL-type, LTA-type and FER-type are preferably used.

It is known that multi-walled carbon nanotubes are produced by making a metal support on a zeolite as a catalyst supporting material, and bringing it into contact with a hydrocarbon at high temperature (Chemical Physics Letters 303, 117-124(1999)). Also, it has been known that although only partially, single-walled carbon nanotubes can be obtained by bringing a zeolite supporting a metal thereon into contact with acetylene at a temperature higher than 800°C, but single-walled carbon nanotubes cannot be obtained at a temperature lower than 800°C (Abstracts of the 21st Fullerene General Symposium, July, 2001).

By the present invention, it has been found out that single-walled carbon nanotubes can be obtained with high-purity, high-selectivity, and high-yield by bringing an oxygenic organic material such as ethanol or the like into contact with a zeolite supporting a metal catalyst thereon. The differences between the single-walled carbon nanotubes according to the present invention and the single-walled carbon nanotubes using a conventional zeolite are (1) the source gas is an oxygenic organic material, (2) the single-walled carbon nanotubes can be yielded at a reaction temperature of 800°C or lower, (3) the yielded carbon nanotubes mainly consist of single-walled carbon nanotubes, and its quality and purity are extremely high.

The production process itself is a combination of conventional known techniques, but it is noteworthy that the effects have high unexpectedness. According to the present invention, the single-walled carbon nanotubes can be produced at a low temperature 800°C or lower, therefore, it is not necessary to use a heat-resisting zeolite. For example, crystalline aluminosilicates in any range can be used.

For example, there are low heat-resisting ones among crystalline aluminosilicates zeolite, but they can be used without problem according to the present invention. The reason why it becomes the highest yield in the case of using a catalyst supporting a metal on a zeolite is not clear at present, but it is considered that the metal is dispersed well by using the uniform pores of zeolite. Therefore, if considering the yield important, the more pores on the outer surface are, the more preferable. Namely, zeolites having two-dimensional or three-dimensional pore structure are preferable. A crystal size is also preferred to be smaller, but if it is too small, handling is assumed to be difficult, therefore, those zeolites generally appeared on the market or used and synthesized for research can be used without limiting largely.

A silica-alumina ratio of a crystalline aluminosilicate zeolite is not particularly limited, but zeolites having the ratio within the range of 2 to 500 are preferably used. Since a reaction temperature is not limited, high thermal resistance that has conventionally been required for producing single-walled carbon nanotubes is not necessary. Therefore, (1) crystalline alumino-phosphate, (2) crystalline aluminosilicate zeolite, (3) dealuminized zeolite where aluminum is removed from crystalline aluminosilicate (dealuminized high-silica type crystalline aluminosilicate) which are generally regarded as low heat-resisting, can be utilized. These zeolites are presumed to be unsuitable for producing carbon nanotubes at a high temperature due to low heat resistance and many structural defects, however, since the production process according to the present invention allows synthesizing single-walled carbon nanotubes at a low temperature, the zeolites can be used sufficiently. In these zeolites, a polarity part of alumino-phosphate, that of aluminosilicate, and a defective site after high silica type crystalline aluminosilicate has been dealuminized have high affinity with a metallic salt, and the zeolites can preferably be used.

Moreover, only a metal catalyst may be used without using a supporting material. For example, the catalyst can be introduced in a reaction area by dissolving a metallic salt and/or an organic metal compound in alcohol or the like, letting it be sprayed from the upper part of a reaction tube, and letting it pass through the reaction area. To be specific, the organic metal compound is ferrocene, cobaltcene or the like.

However, it is preferable to make a catalyst support on a supporting material in order to avoid the agglomeration of catalyst particles.

According to the present invention, a carbon source (a source gas) comprising an oxygenic compound is brought into contact with a catalyst, and as for the atmosphere of the gas, the pressure or partial pressure is 0.1 - 200 Torr (0.01 - 27 kPa), preferably 0.2 - 50 Torr (0.02 - 6.7 kPa), and more preferably 1 - 20 Torr (0.13 - 2.7 kPa). More preferably, the pressure or partial pressure is not higher than 1 - 10 Torr (0.13 - 1.3 kPa). Here, if the partial pressure is too high, problems such as adhesion of amorphous carbon to the single-walled carbon nanotubes are increased . Also, if the partial pressure is too low, yield of the single-walled carbon nanotubes is decreased. The whole pressure may be on any of reduced, normal, and pressurized conditions. Moreover, an inert gas or the like other than the raw material gas may coexist. The pressure is not particularly limited, but normal or reduced pressure is preferable to proceed the reaction considering easiness of the operation and little adhesion of amorphous carbon to the single-walled carbon nanotubes.

It is preferable to make a flow of the raw material gas. To be specific, a carbon source (a source gas) comprising an oxygenic compound is made to flow by using a vacuum pump, or a supporting material gas is recommended for the use.

The supporting material gas is a gas for making a gas flow. The gas is not particularly limited, an inorganic gas is mainly recommended for the use. The supporting material gas is not particularly limited as long as it is an inorganic gas, but especially an inert gas is preferable because it does not affect on the reaction. For example, nitrogen, helium, argon, or the like can preferably be used. To make a gas flow of the source gas after the gas is brought to a reduced partial pressure, it is preferable to use especially a vacuum pump therefor and make a gas flow of the source gas under a reduced pressure. It is preferable to trap these raw material gases by cooling just in front of the pump, to recover and reuse the liquid for the source of the trapped raw material gases, and to use it as an energy source by burning. The raw material vapor can be transferred with a supporting material gas in a similar way.

According to the present invention, it is possible to provide below described method as a specific producing process of the single-walled carbon nanotubes.

The first producing process comprises:

   a) a step of arranging catalyst in a reactor; and
   b) a step of yielding carbon nanotubes by bringing at least one kind of oxygenic organic material selected from the group of alcohols and ethers into contact with the aforementioned catalyst under the condition of the pressure or partial pressure of the oxygenic organic material 0.1 to 200 Torr (0.01 to 27 kPa) at the temperature of 500 to 1500°C;

and is characterized in that the carbon nanotubes yielded are obtained so as to adhere to one end of the catalyst, and also the carbon nanotubes of 95% or more consist of single-walled carbon nanotubes.

The second producing process comprises:

   a) a step of arranging catalyst in a reactor; and
   b) a step of yielding carbon nanotubes by bringing at least one kind of oxygenic organic material selected from the group of alcohols and ethers into contact with the catalyst under the condition of the pressure or partial pressure of the oxygenic organic material of 0.1 to 200 Torr (0.01 to 27 kPa) and the temperature of 500 to 1500°C;

and is characterized in that the carbon nanotubes yielded are obtained so as to adhere to one end of the catalyst, and also when the composition containing carbon nanotubes is observed by a transmission electron microscope of $10^6$-magnification or more, at least 30% of a 100 nm square viewing area is occupied by the carbon nanotubes and also the carbon nanotubes of 95% or more are single-walled carbon nanotubes.

The third producing process comprises:

a) a step of arranging catalyst in a reactor;
b) a step of yielding carbon nanotubes by bringing at least one kind of oxygenic organic material selected from the group of alcohols and ethers into contact with the catalyst at the temperature of 500 to 1500°C; and
c) a step of recovering oxygenic organic material having passed through the step b) and reusing the oxygenic organic material in the step b).

The fourth producing process comprises:

a) a step of arranging catalyst in a reactor;
b) a step of making an inert gas and/or reducing gas flow into the reactor while the reactor is heated up to a high temperature between 500 to 1500°C;
c) a step of evacuating the inside of the reactor after the reactor has reached the aforementioned high temperature; and
d) a step of making at least one kind of oxygenic organic material to be selected from the group of alcohols and ethers flow into the reactor maintained at the highest temperature so that the pressure or partial pressure is 0.1 to 200 Torr (0.01 to 27 kPa), and yielding carbon nanotubes so as to adhere to one end of the catalyst by bringing into contact with the catalyst;

and is characterized in that the carbon nanotubes of 95% or more yielded so as to adhere to one end of the catalyst are single-walled carbon nanotubes.

A mechanism of the producing process of the present invention is not completely clear. However, it is conceivable to be following ones. Namely, it is conceivable that under heated temperature and in the vicinity of the catalyst, the carbon source comprising the oxygenic compound, preferably oxygenic organic material, or particularly preferably alcohols or ethanol; and wherein ether creates OH radicals or oxygen radicals, and the OH radical or the oxygen radicals react carbon atoms with dangling bond.

Namely, while carbon atoms which become a part of stable single-walled carbon nanotubes are maintained, amorphous carbon which cannot become the part of single-walled carbon nanotubes is removed by attack of the OH radical or the oxygen radical. Thus, since yielding and purification of the single-walled carbon nanotubes are performed simultaneously, the single-walled carbon nanotubes can be yielded in a very selective manner. Namely, in the present invention, the existence of the carbon source comprising the oxygenic compound enables to realize the mechanism. Alcohols and/or ethers are preferably used as raw materials, which satisfy these conditions simultaneously.

It should be noted that there is a technique using high temperature and high pressure CO gas as a process with a few amorphous carbon. In this case, annealing of the nanotubes is performed on the condition that extremely high temperature is secured. However, according to producing process of the present invention, it is not necessary to perform annealing and it is possible to synthesize single-walled carbon nanotubes at relatively low temperature.

The reason thereof is not clear, however, it is conceivable that the carbon source comprising the oxygenic compound containing hydrogen is important. It can be supposed that the catalyst and the carbon source comprising oxygenic compound come into contact with each other, and hydrogen gas generated by the decomposition activates the catalyst to remove additional oxygen, effecting to reduce the reaction temperature. Namely, the raw materials containing oxygen, carbon and hydrogen are preferable, and, as a preferable raw material, an oxygenic organic material can be mentioned. As a superordinate concept of this matter, separately supplying a carbon source, an oxygen source, and a hydrogen source also falls within the range of the present invention.

The catalyst adheres to the one end of the carbon nanotubes obtained by using the producing process according to the present invention. When the composition containing carbon nanotubes is observed by a transmission electron microscope (TEM) of $10^6$-magnification or higher (more), a photograph that the 100 nm square viewing area of at least 10% is occupied by the carbon nanotubes and the carbon nanotubes of 70% or more are single-walled carbon nanotubes is obtained. That is to say a high-purity and a high-yield.

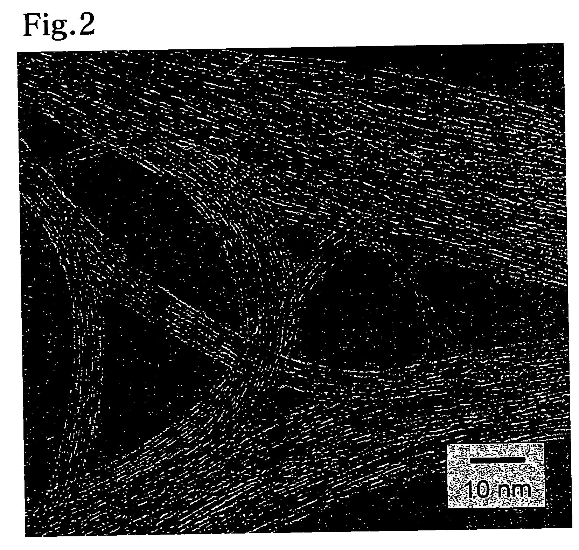

If another condition in the present invention is selected, the single-walled carbon nanotubes with higher purity are obtained. When the composition containing carbon nanotubes yielded is observed by the transmission electron

microscope of $10^6$-magnification or higher (more), a photograph that the 100 nm square viewing area of at least 30% is occupied by the carbon nanotubes and the carbon nanotubes of 95% or more are single-walled carbon nanotubes is obtained (see Fig.2).

The single-walled carbon nanotubes yielded in the conventional producing process are mixture of amorphous carbon or a great deal of multi-walled carbon nanotubes; and metal catalysts are found not only one end of the single-walled carbon nanotubes but also all places of it. Consequently, it could not be obtained above-described transmission electron microscope photograph. To observe with the transmission microscope of $10^6$- magnification also means to observe that the photograph measured by two hundreds thousand-magnification blows up to five times. The transmission microscope is preferable to observe with high-resolution transmission electron microscope.

Further, the single-walled carbon nanotubes obtained in the producing process of the present invention have few defects or no defect in the single walls, thus they are very high quality. Defects of the single-walled carbon nanotubes can be observed by the transmission electron microscope. The defect means a part where the walls of the single-walled carbon nanotubes are seen discontinued.

Few defects can be also defined as follows. Namely, when performing thermal analysis of the composition containing the single-walled carbon nanotubes obtained by the producing process of the present invention at temperature rising rate of 5°C/minute in the air, peak position of linear differential curve of weight decrease by burning is 500°C or higher. Preferably, the peak position is 540°C or higher. Namely, heat resistance or oxidation resistance is high. It should be noted that the thermal analysis is described later.

The single-walled carbon nanotubes obtained by the conventional producing process are adhered by a lot of catalysts to be oxidation catalysts, or even if the metal catalysts are removed, there are so many defects, so that when performing thermal analysis in the air, only resulting in oxidation burning at low temperature. The single-walled carbon nanotubes obtained by the present invention, even though performing thermal analysis in the condition that catalyst or catalyst support adheres thereon, namely the condition just after the yielding, can obtain result of high oxidation resistance as described above. Of course, when reducing density of the catalyst in the composition containing single-walled carbon nanotubes, heat resistance of the carbon nanotubes becomes high. The carbon nanotube whose peak position is 550°C or higher, 560°C or higer, 570°C or higher or 580°C or higer each can be obtained.

Thus, the single-walled carbon nanotubes with high heat resistance and high oxidation resistance have not been obtained until now. It can be obtained initially in the present invention. Further, half value width is 170°C or lower. Similar to the peak position, when reducing density of the catalyst in the composition containing single-walled carbon nanotubes, namely when increasing amount of carbon nanotubes, it is possible to minimize the half value width. According to the producing process of the present invention, it is possible to obtain the carbon nanotube whose half value width is 120°C or less, 100°C or less, 90°C or less, 80°C or less, 70°C or less, or 60°C or less as the most sharpest one. Small half value width means high purity and small defect site, and indicates that diameter distribution of the single-walled carbon nanotubes is uniform.

Further, as for single-walled carbon nanotubes obtained in the present invention, their major component is the single-walled carbon nanotubes; and it is possible to estimate its diameter by the resonance Raman scattering measurement. Diameter is obtained by the following equation.

$$\text{(diameter (nm) of the single-walled carbon nanotube)} = 248/\text{(Raman shift (cm}^{-1}\text{) of RBM)}$$

It should be noted that "RBM" is described later.

In the present invention, average diameter obtained by the resonance Raman scattering measurement is defined that diameters obtained from peaks in the vicinity of 150 to 300 cm$^{-1}$ (also including up to 310 cm$^{-1}$) when performing the resonance Raman scattering measurement (excitation wavelength 488nm) are multiplied by peak height; obtained values are added up; and the total amount is divided by the total amount of peak height. It is arguable whether or not there is quantitative property in peak height according to the resonance Raman scattering measurement, so that there are possibilities that measured average diameter is different from actual average diameter. However, in the result obtained from the transmission electron microscope, a sight is limited, and labor is necessary for the method to obtain diameter, with the result that in the present invention, average diameter is defined by the process using the resonance Raman scattering measurement.

According to the producing process of the present invention, it is possible to obtain the single-walled carbon nanotubes with high quality and high purity as described above. The composition containing the single-walled carbon nanotubes obtained by the producing process of the present invention is also included as the composition within the range of the present invention; and it is possible to point out six kinds of substances (1) to (6), which fulfill following conditions as the composition containing the single-walled carbon nanotube. According to the present invention, these are produced separately by controlling producing conditions.

A composition containing single-walled carbon nanotubes satisfying the conditions mentioned below; namely,

a) when the composition containing single-walled carbon nanotubes produced above is thermally analyzed at temperature rising rate of 5°C/min, a peak position of a linear differential curve of weight decrease by burning is obtained at 500°C or higher, and the half value width of the peak should be smaller than 170°C;

b) when the composition is observed by a transmission electron microscope of $10^6$-magnification, the single-walled carbon nanotubes need to be observed;

c) when the composition containing single-walled carbon nanotubes is observed by the resonance Raman scattering measurement (an excitation wavelength is 488nm);

1) G band should be observed in the vicinity of 1590cm$^{-1}$ and said G band should be split;

2) a peak height in the vicinity of 1350cm$^{-1}$ (D band) is one-third or lower of a peak height in the vicinity of 1590cm$^{-1}$.

A composition containing single-walled carbon nanotubes satisfying the conditions mentioned below, namely,

a) when the composition containing single-walled carbon nanotubes is thermally analyzed at a temperature rising rate of 5°C/min in air, in a peak position of a linear differential curve of weight decrease by burning is observed at 570°C or higher, and the half value width of the peak should be smaller than 80°C;

b) when the composition containing single-walled nanotubes is observed under a transmission electron microscope of $10^6$-magnification, at least 10% of a 100nm square viewing area is occupied by the carbon nanotubes, and 70% or more thereof is the single-walled carbon nanotubes.

A composition containing single-walled carbon nanotubes, wherein the maximum peak between 150 and 300cm$^{-1}$ is present at the position of $258 \pm 5$cm$^{-1}$ when the composition containing single-walled carbon nanotubes is observed by a resonance Raman measurement (the excitation wavelength is 488nm).

A composition containing single-walled carbon nanotubes, wherein the first maximum peak and the second maximum peak between 150 and 300cm$^{-1}$ are present at the position of $201 \pm 5$cm$^{-1}$ and $258 \pm 5$cm$^{-1}$, respectively, when the composition containing single-walled carbon nanotubes is observed by a resonance Raman measurement (the excitation wavelength is 488nm).

A composition containing single-walled carbon nanotubes, wherein the maximum peak between 150 and 300cm$^{-1}$ is present at the position of $193 \pm 5$cm$^{-1}$ when the composition containing single-walled carbon nanotubes is observed by a resonance Raman measurement (the excitation wavelength is 633nm).

A composition containing single-walled carbon nanotubes, wherein the maximum peak between 150 and 300cm$^{-1}$ is present at the position of $288 \pm 5$cm$^{-1}$ when the composition containing said single-walled carbon nanotubes is observed by a resonance Raman measurement (the excitation wavelength is 633nm).

When performing thermal analysis of the composition containing single-walled carbon nanotubes at a temperature rising rate of 5°C/minute in the air, peak position of linear differential curve of weight decrease by burning is 500°C or higher. Here, the thermal analysis is the analysis by means of a device called generally as TG/DTA. TG analysis (TGA) is the measurement in which weight decrease is measured when heating a specimen, while DTA is the measurement in which colorific and endoergic values are measured when heating a specimen. The linear differential curve of weight decrease by burning is generally called as DTG. When weight decrease is judged whether it depends on burning or not, appearance of peak value of heat generation at DTA is regarded as weight decrease by burning.

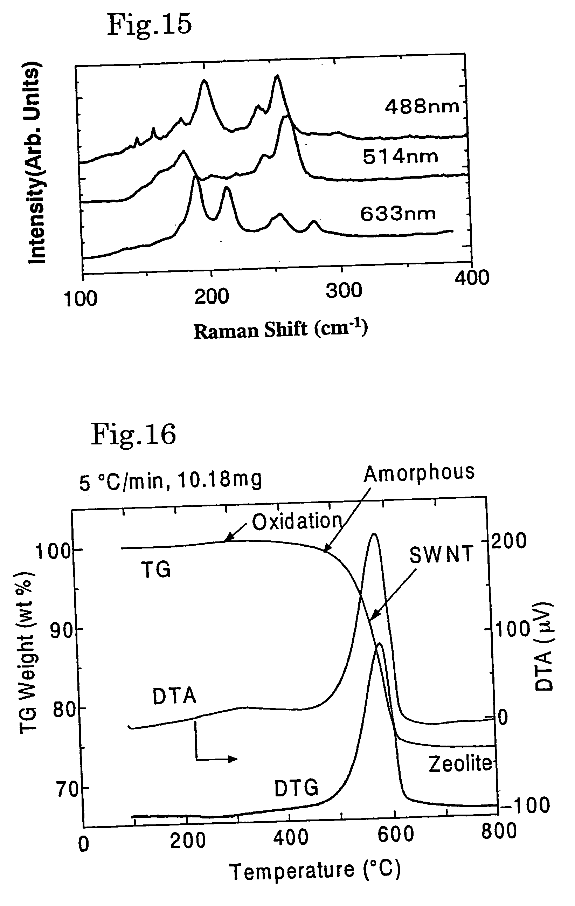

It is well known that yield and quality of the yielded single-walled carbon nanotubes can be evaluated by TGA. The example of TGA of a specimen yielded by the producing process of the present invention is shown in Fig.16.

Measurement procedure of TGA of the present invention is as follows. About 10 mg of the yielded specimen is held(kept) at 100°C for 120 minutes to remove absorbed water, and is then subjected to a temperature rising rate of 5°C/minute. The air is used as atmosphere. In Fig.16, weight change (TG), differential thermal analysis (DTA), and weight change differential (DTG) are shown. As reference of DTA, empty platinum pan is used. Slight weight increase in the range of 250°C to 400°C is mainly caused by oxidation of a metal catalyst, weight decrease in the range of 400°C to 500°C is caused by oxidation decomposition reaction of amorphous carbon, weight decrease in the range of 500°C to 600°C is caused by oxidation decomposition reaction of single-walled carbon nanotubes, and residues in the range higher than 800°C are zeolite and metal catalyst. In the present invention, corresponding amount of weight decrease between 500°C to 700°C is regarded as that of the single-walled carbon nanotubes. Namely, yield of the single-walled carbon nanotubes is the weight decrease rate in 500°C to 700°C.

It is well known that the oxidizing decomposition reaction temperature of the single-walled carbon nanotubes strongly depends on nanotube diameter and defect structure of tube wall. The larger the nanotube diameter is, the higher the temperature becomes; and the fewer the defect and higher the quality is, the higher the temperature becomes.

Namely, the higher the peak position of linear differential curve (DTG) of weight decrease by burning becomes, the fewer the defect and higher the heat resistance is. The single-walled carbon nanotubes obtained by the conventional producing process in which much catalyst to become oxidized catalyst adhere thereto, and even though metal catalyst is made to remove, there exist many defects, when performing thermal analysis in the air, only resulting in oxidation burning at low temperature. The single-walled carbon nanotubes obtained by the producing process of the present invention, even though thermal analysis is performed in the condition where catalyst adheres (condition where catalyst is not removed), the result in which the oxidation resistance is high as described above is obtained. Of course, when continuously reducing catalyst density within the composition containing the single-walled carbon nanotubes, namely, when continuously increasing amount of the single-walled carbon nanotubes, heat resistance of the carbon nanotube becomes high. As known from the embodiment, by controlling reaction condition, carbon nanotubes whose peak position is of 540°C or more, 550°C or more, 560°C or more, 570°C or more or 580°C or more, respectively, are obtained.

The single-walled carbon nanotubes with high heat resistance do not exist in the world until now. It can be obtained for the first time in the present invention. Further, the half value width of the peak is 170°C or lower. Like the peak position, when reducing catalyst density within composition containing the single-walled carbon nanotubes, the half value width is minimized. By controlling reaction condition, the carbon nanotubes whose half value width is 120°C or lower, 100°C or lower, 90°C or lower, 80°C or lower, 70°C or lower, or 60°C or lower as the most sharpest one are obtained.

Single-walled carbon nanotubes obtained by the present invention can achieve high heat resistance as described above even though it is in the initial condition of synthesize, namely in the condition where the catalyst is adhered thereon. It is expected that it is possible to make heat resistance higher by removing catalyst or by annealing in vacuum atmosphere.

For the composition containing single-walled carbon nanotubes of the present invention, G band is required to be observed in the vicinity of 1590 cm$^{-1}$ and to be split when observed by resonance Raman scattering measurement (excitation wavelength 488nm). Particularly, the carbon nanotubes with few defects has such split. Of course, although some single-walled carbon nanotubes obtained by the producing process of the present invention have not such a split, it is possible to obtain single-walled carbon nanotubes with a split at G band by selecting another reaction condition.

For the composition containing single-walled carbon nanotubes of the present invention, the ratio of the peak height in the vicinity of 1350 cm$^{-1}$ (D band) to the peak height in the vicinity of 1590cm$^{-1}$ is required to be 1/3 or less, when observed by the resonance Raman scattering measurement (excitation wavelength of 488nm). A few ratio of the peak height in the vicinity of 1350 cm$^{-1}$ (D band) to the peak height in the vicinity of 1590cm$^{-1}$ represents that the obtained single-walled carbon nanotubes are of high quality. The ratio is preferably 1/10 or less, more preferably 1/20 or less. It is possible to obtain single-walled carbon nanotubes with a lower D/G ratio by controlling the condition. In Raman peak position of the present invention, "in the vicinity" means ±10cm$^{-1}$.

It is preferable that diameters of single-walled carbon nanotubes are controllable and it is possible to control the diameter by temperature and partial pressure of the raw material, according to the present invention. Therefore a composition containing single-walled carbon nanotubes with a maximum peak of 258±5cm$^{-1}$ between 150 to 300cm$^{-1}$ when observed by means of the resonance Raman scattering measurement (excitation wavelength of 488nm) and a composition containing single-walled carbon nanotubes with a maximum peak of 193±5cm$^{-1}$ or 250±5cm$^{-1}$ between 150 to 300cm$^{-1}$ when observed by means of resonance Raman scattering measurement (excitation wavelength of 633nm) can be obtained. Particularly, in the case of single-walled carbon nanotubes of the present invention, it is characteristic that the peak of 258±5cm$^{-1}$ in RBM is the highest one or the second highest one when measured at an excitation wavelength of 488nm. It is also characteristic that the peak of 201±5cm$^{-1}$ is the highest one when the peak of 258±5cm$^{-1}$ is the second.

An average diameter of 1.2nm or less of single-walled carbon nanotubes are obtained by determining the average diameter as described above from the peaks obtained by the resonance Raman scattering measurement (excitation wavelength of 488nm). It is preferable that single-walled carbon nanotubes are thin from the following reasons.

    (1) It is easy to emit electron when used as electron emission material.
    (2) Additional effects are large in the case of composite materials with resin or the like.

It is possible to produce single-walled carbon nanotubes by controlling the average diameter to be 1.1 nm or less, preferably 1.0 nm or less.

Since single-walled carbon nanotubes of the invention also has a characteristic of high purity, it is possible to obtain a photograph showing at least 30% of viewing area within 100 nm-square of sight is of the carbon nanotubes, and the carbon nanotubes of 95% or more are of single-walled carbon nanotubes by observing the composition containing single-walled carbon nanotubes with a transmission electron microscope (TEM) by million magnification or more.

According to the producing process of the present invention, it is possible to obtain single-walled carbon nanotubes as described above and also it is possible to obtain a composition containing single-walled carbon nanotubes as described above.

The process of the producing process of the present invention can be carried out in such a way that a catalyst is put in an electric furnace or the like and is raised up to the aforementioned heat temperature while keeping the aforementioned atmosphere temperature of the catalyst, but other than this means, it also can be carried out by putting the catalyst under a condition that the atmosphere and temperature are set as required by the present invention in advance, thus the process can be carried out as a combustion reaction.

Single-walled carbon nanotubes obtained by the producing process of the present invention is capable of applying to various fields where single-walled carbon nanotubes are actually used at present, or its possibility of use is suggested, for example, various kinds of electron device such as nanoscale wiring, field-effect transistor, field emission display emitter, various electron device elements such as a material for a negative electrode of a lithium secondary cell, gas adsorption material, hydrogen storage material, various kinds of composite materials, and so on. Other than these fields, it is possible to apply to various fields depending on characteristic of single-walled carbon nanotubes.

According to the present invention as described above, it is possible to produce single-walled carbon nanotubes of high quality with few defects, high heat resistance and high oxidation resistance, without being laced with multi-walled carbon nanotubes, amorphous carbons, carbon nanoparticles and the like. Further, mass-production of single-walled carbon nanotubes of high quality with few defects safely and in a high yield is possible.

Hereinafter, the present invention is further described in detail based on embodiments, however, the present invention is not limited by the embodiments.

Embodiment 1

[Synthesis of Catalyst]

A Y-type zeolite (HSZ-390HUA (produced by TOSOH Corporation: silica/alumina ratio = approximately 400) of about 1g, iron acetate $((CH_3COO)_2Fe)$, and cobalt acetate $((CH3COO)_2Co \cdot 4H_2O)$ were prepared. Iron acetate and cobalt acetate were dissolved in ethanol of $20cm^3$ so that iron and cobalt are to be 2.5wt% respectively, and then Y-type zeolite was mixed therewith. Thereafter, ultrasound was applied for 10 minutes to the obtained mixture, and then it was dried at 80°C for 24hours to obtain yellow-white powder catalyst.

[Synthesis of Single-walled CNT]

The above described yellow-white powder catalyst was put on a quartz board and then placed in a quartz tube in an electric furnace. While the inside of the furnace is being raised up to desired temperatures (600°C, 650°C, 700°C, 800°C, 900°C) (approximately for 30 minutes), the inside of the quartz tube (inner diameter: 27 mm) was put under Ar atmosphere. Concretely, Ar gas was introduced therein by 200 sccm.

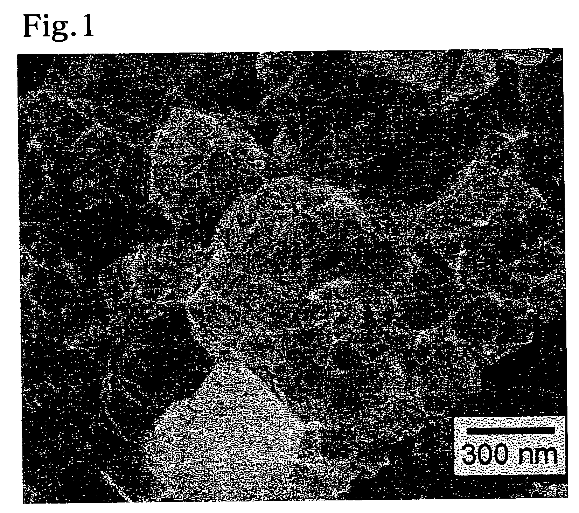

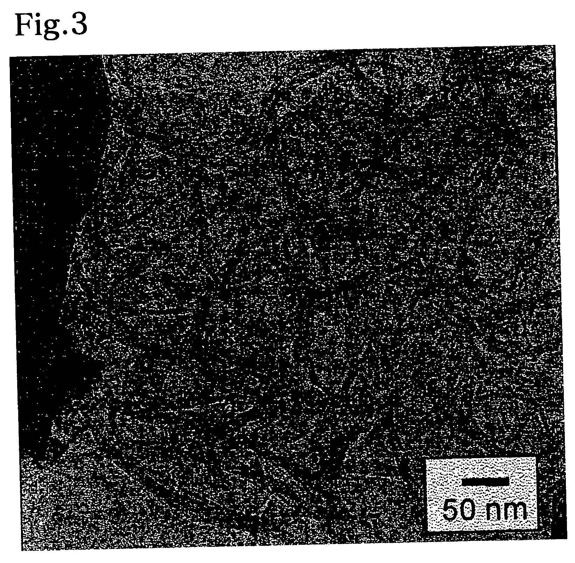

After the temperature inside of the furnace reached the desired temperature, the inside of the quartz tube was evacuated to be under ethanol atmosphere maintaining the temperature for about 10min. In this case, the ethanol pressure was 5 - 10 Torr (0.67 - 1.3 kPa), and the ethanol was introduced by 100 - 300 sccm using a vacuum pump. This flow rate can be calculated based on a decrease of ethanol per hour. Then, black powders A-1 to A-5 were obtained on the quartz board by lowering the temperature. The obtained black powders A-1 to A-5 were observed by resonance Raman scattering measurement (excitation wavelength: 488nm), SEM (Fig.1), and TEM (Fig.2 and Fig.3), then it was confirmed that they were single-walled carbon nanotubes of good quality with a diameter of 0.8 to 1.5 nm.

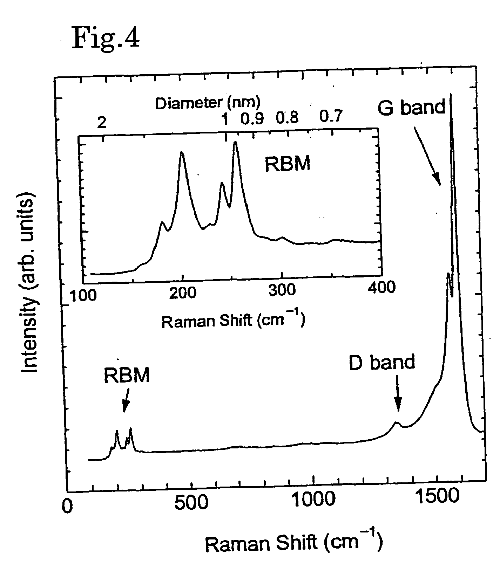

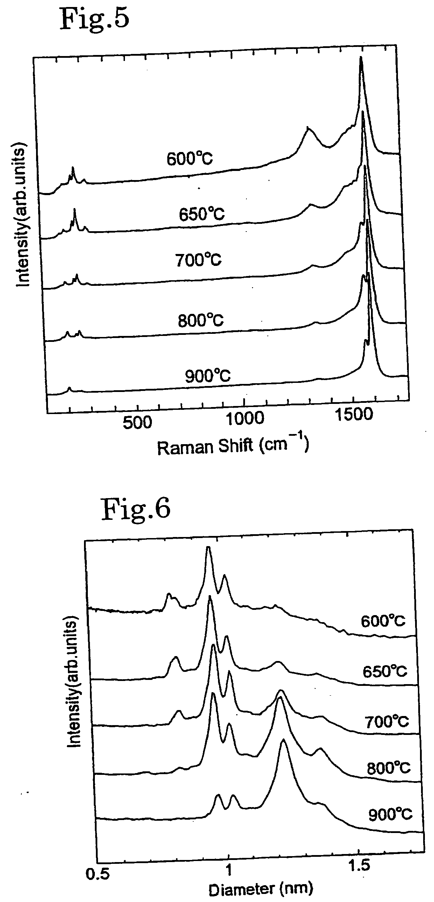

The results are shown in Table 1 and the results of the Raman spectra analysis are shown in Fig.4 to Fig.6. Moreover, in Fig.6, the diameter of single-walled carbon nanotubes (abbreviated as CNT) was converted using the following fomula;

$$\text{(Diameter of a single-walled CNT)} = 248/\text{Raman shift } (cm^{-1}) \text{ of RBM)}.$$

RBM will be explained later.

Table 1

| Catalyst | Carbon source | Heating temp. (°C) | Single-walled CNT | Average diameter (nm) | RBM (excitation wavelength: 633nm) maximum peak position$(cm^{-1})$ |
|---|---|---|---|---|---|
| Fe/Co | Ethanol | 600 | A-1 | 0.95 | 283 |

(continued)

| Catalyst | Carbon source | Heating temp. (°C) | Single-walled CNT | Average diameter (nm) | RBM (excitation wavelength: 633nm) maximum peak position(cm$^{-1}$) |
|---|---|---|---|---|---|
| Fe/Co | Ethanol | 650 | A-2 | 0.97 | 283 |
| Fe/Co | Ethanol | 700 | A-3 | 0.99 | 283 |
| Fe/Co | Ethanol | 800 | A-4 | 1.05 | 193 |
| Fe/Co | Ethanol | 900 | A-5 | 1.14 | 193 |

As shown in table 1, the higher the temperature was, the larger the diameter of single-walled carbon nanotubes was. Moreover, judging from the SEM images and the TEM images shown in Fig.1 to Fig.3, they were confirmed to be of very high quality single-walled carbon nanotubes without defect.

From Fig.3, the photograph which shows catalyst is adhering to one end is seen. From Fig.2, it is also appreciated that the photograph taken by the observation by a transmission electron microscope of about 1.1 million-magnification, which shows at least 30% of a 100 nm-square visual field area was occupied by the carbon nanotubes and at least 95% of the carbon naotubes were single-walled carbon nanotubes, is obtained. Further, single-walled carbon nanotubes have been also confirmed to be of very high quality with few defects by Fig.4 and Fig.5.

Namely, it was confirmed that a G band was observed in the vicinity of 1590cm$^{-1}$ and the G band was split in the reaction at 700°C and higher; a peak (RBM: radial breathing mode) derived from single-walled carbon nanotubes and related to the diameter of single-walled carbon nanotubes were observed between 150 and 300cm$^{-1}$; and an un-desired peak derived from amorphous carbon was not observed on single-walled carbon nanotubes of the present invention at 1350cm$^{-1}$, or the peak was low even if observed (Table 7).

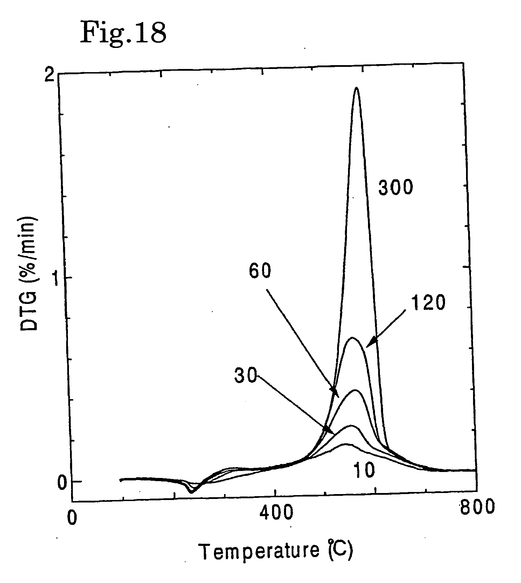

Further, as a result of the thermal analysis of the sample A-4 at a temperature rising rate of 5°C/min in the air, a peak position of the linear differential curve of weight decrease by burning was at 543°C. The half value width of the peak was at 162°C (Fig.18).

Moreover, the results of the Raman spectra analysis of the sample A-4 measured with excitation wavelength of 499nm, 514nm and 633nm respectively are shown in Fig.15. The Raman analysis with 488nm shows that the highest peak is at $258 \pm 5$cm$^{-1}$ and the second highest peak at $201 \pm 5$cm$^{-1}$. Moreover, the Raman analysis with 633nm shows the highest peak is at $193 \pm 5$cm$^{-1}$.

Further, concerning the other samples, Table 1 shows the results of maximum peak positions in RBM (150 to 300) of the Raman spectra analysis measured with an excitation wavelength of 633nm. The results of RBM peak positions with an excitation wavelength of 488nm are shown in Table 7.

Embodiment 2

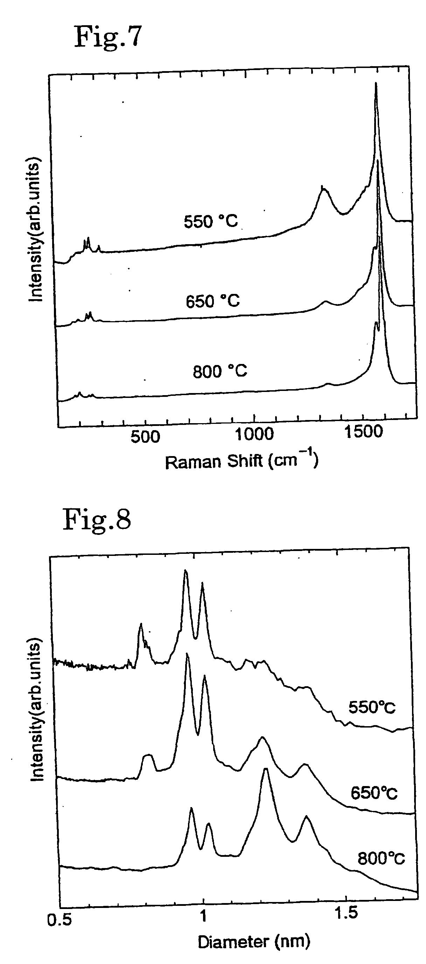

Instead of ethanol used in the embodiment 1, methanol was used in the similar way, and black powder, namely, single-walled carbon nanotubes A-6 to A8 was obtained. The results of this are shown in Table 2. Moreover, results of the Raman spectra analysis are shown in Fig.7 and Fig.8. D/G ratios as the results of the Raman analysis were read from Fig.7, and the results of the calculations are shown in Table 7.

Table 2

| Catalyst | Carbon source | Heating Temp. (°C) | Single-walled CNT | Average diameter (nm) |
|---|---|---|---|---|
| Fe/Co | Methanol | 550 | A-6 | 0.96 |
| Fe/Co | Methanol | 650 | A-7 | 0.97 |
| Fe/Co | Methanol | 800 | A-8 | 1.18 |

As shown in Table 2, the higher the temperature was, the larger the diameter of single-walled carbon nanotubes was. Moreover, single-walled carbon nanotubes were confirmed to be of very high quality without defect from the unshown TEM (SEM) images (the image is similar to Fig.1 to Fig.3). Further, also the results similar to those of the embodiment 1 were confirmed from the results of the Raman spectra analysis.

Embodiment 3

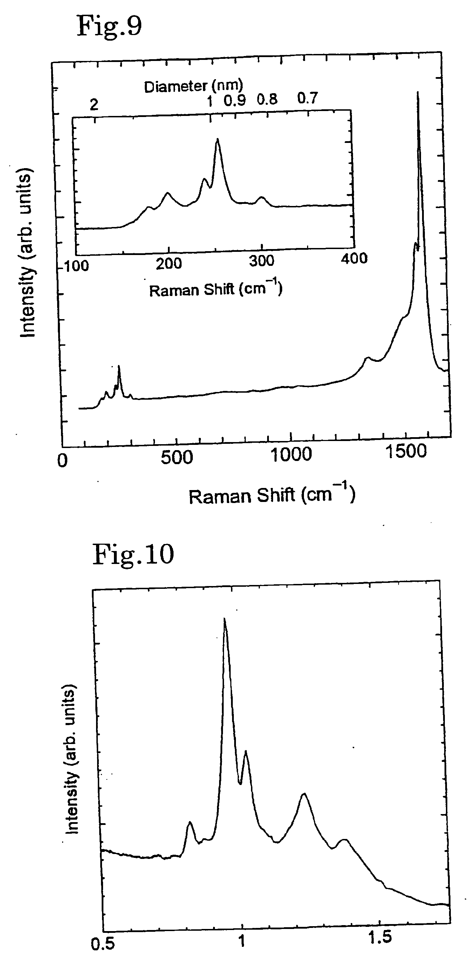

Instead of the catalyst Fe/Co used in the embodiment 1, Ni/Co was used, and similarly, black powder, namely, single-walled carbon nanotubes A-9 was obtained. The results are shown in Table 3. Moreover, the results of the Raman spectrum analyses are shown in Fig.9, Fig.10 and table 7.

Table 3

| Catalyst | Carbon source | Heating temp. (°C) | Single-walled CNT | Average diameter (nm) |
|---|---|---|---|---|
| Ni/Co | Ethanol | 800 | A-9 | 0.99 |

From unshown TEM (SEM) image (images are similar to Fig.1 to Fig.3), single-walled carbon nanotubes were confirmed to be of very high quality without defect. Further, also the results similar to those of the embodiment 1 were confirmed from the results of the Raman spectrum analysis.

Embodiment 4

Instead of zeolite, the supporting material for the catalyst Fe/Co, of the embodimenr 1, Mgo was used to obtain black powder, namely single-walled carbon nanotubes A-10. The result of this is shown in Table 4.

Table 4

| Catalyst | Supporting material | Carbon source | Heating temp. (°C) | Single-walled CNT | Average diameter (nm) |
|---|---|---|---|---|---|
| Fe/Co | MgO | Ethanol | 800 | A-10 | 0.99 |

Single-walled carbon nanotubes were confirmed to be of very high quality without defect from unshown TEM (SEM) images (images are similar to Fig.1 to Fig.3). Further, also the results similar to those of the embodiment 1 were confirmed from the results of unshown Raman spectrum analysis.

Embodiment 5

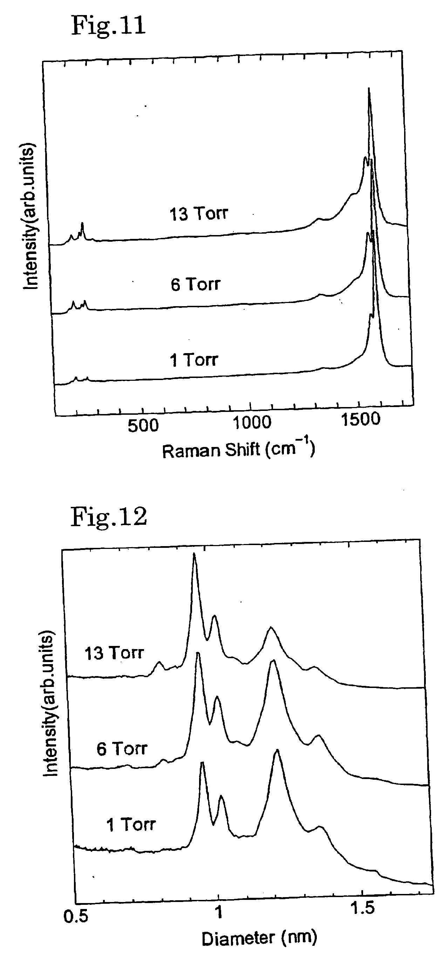

Single-walled carbon nanotubes A-11 and A-13 were obtained by the same process as used in the embodiment 1 for the synthesis of single-walled carbon nanotubes A-4. In the case of single-walled carbon nanotubes A-11, an ethanol pressure of 1 Torr (0.013 kPa) and a flow of 60 sccm were applied; and in the case of single-walled carbon nanotubes A-13, an ethanol pressure of 13 Torr (1.7 kPa) and a flow of 1840 sccm were applied. These preparation conditions are shown in Table 5 together with the average diameters of the obtained single-walled carbon nanotubes. In Table 5, single-walled carbon nanotubes A-12 corresponds to the single-walled carbon nanotubes A-4 in the embodiment 1. In addition, the results of the Raman spectra analysis on the single-walled carbon nanotubes A-11, A-12 and A-13 are shown in Figure 11, and the diameter distribution of single-walled carbon nanotubes obtained by the Raman spectra analysis is shown in Figure 12. Results obtained by the Raman spectra analysis are shown in Table 7.

Table 5

| Catalyst | Carbon source | Pressure (Torr) | Flow rate (sccm) | Heating temp. (°C) | Single-walled CNT | Average diameter (nm) |
|---|---|---|---|---|---|---|
| Fe/Co | Ethanol | 1 | 60 | 800 | A-11 | 1.05 |
| Fe/Co | Ethanol | 6 | 300 | 800 | A-12 | 1.05 |
| Fe/Co | Ethanol | 13 | 1840 | 800 | A-13 | 0.98 |

According to unshown TEM and SEM images (similar to those in Figures 1, to 3), single-walled carbon nanotubes A-11, A-12 and A13 were confirmed to be of extremely high quality without defect. In addition, the following was considered based on the pressure and flow volume variations in the carbon source as shown in Table 5, Figure 11 and Figure 12.

Namely, pressure and flow of the carbon-source are considered to indicate the collision frequency between the carbon source and the catalyst. When the carbon-source pressure is low - for example, 6 Torr (0.78 kPa) or less - the collision frequency is low, and it is considered that sufficient time is available for annealing of single-walled carbon nanotubes. Accordingly, when the carbon-source pressure is low - for example, 6 Torr (0.78 kPa) or less - single-walled carbon nanotubes with a relatively large diameter can be obtained, and it is considered that the corresponding diameter distribution would be approximately uniform.

Conversely, when the carbon-source pressure is relatively high - for example, 13 Torr (1.7 kPa) or more - the collision frequency is high, and it is considered that sufficient time for annealing of single-walled carbon nanotubes would tend to decrease. Accordingly, when the carbon-source pressure is relatively high - for example, 13 Torr (1.7 kPa) or more - it is considered that the relative amount of single-walled carbon nanotubes with a relatively large diameter, for which a long annealing time is required, would tend to decrease.

Embodiment 6

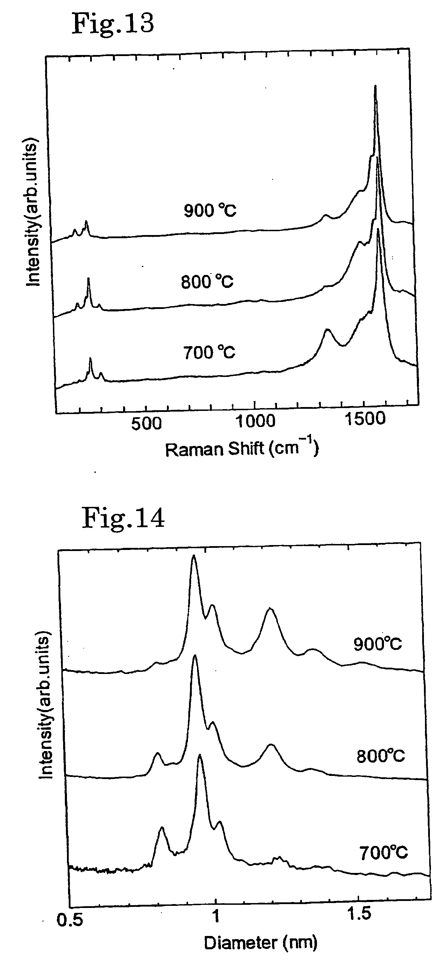

Using Co (5% by weight) and diethyl ether instead of Fe/Co and ethanol as used in embodiment 1, under the process similar to those in embodiment 1 except for setting a diethyl ether pressure to 20 Torr (2.7 kPa), black powder - more specifically, single-walled carbon nanotubes A-14, A-15, and A-16 - were obtained. The applied heating temperatures and the obtained results are shown in Table 6. In addition, the results of Raman spectral analysis on single-walled carbon nanotubes A-14, A-15 and A16 are shown in Figure 13, and the diameter distribution of single-walled carbon nanotubes obtained by the Raman spectra analysis is shown in Figure 14. D/G ratio results obtained by the Raman spectra analysis are shown in Table 7.

Table 6

| Catalyst | Carbon source | Heating temp. (°C) | Single-walled CNT | Average diameter (nm) |
|----------|---------------|--------------------|--------------------|-----------------------|
| Co | Diethyl ether | 700 | A-14 | 0.93 |
| Co | Diethyl ether | 800 | A-15 | 0.98 |
| Co | Diethyl ether | 900 | A-16 | 1.02 |

As indicated by Table 6, the higher the temperature was, the larger was the average diameter of the obtained single-walled carbon nanotubes. Furthermore, according to the unshown TEM and SEM images (similar to those in Figures 1, 2 and 3), single-walled carbon nanotubes were confirmed to be of extremely high quality without defect. In addition, the Raman spectral analysis also confirmed that single-walled carbon nanotubes were similar to those in embodiment 1.

Embodiment 7

Under the process identical to those in embodiment 1, except for setting an electrical furnace temperature to 800°C, an ethanol pressure to 10 Torr (1.3 kPa) and reaction times to 10, 30, 60, 120, and 300 minutes respectively, black powder - more specifically, single-walled carbon nanotubes A-17 to A-21 - were obtained. The electrical furnace temperature and the derived results are shown in Table 8. A-17 and A-4 represent identical samples.

Table 7

| Sample | A-1 | A-2 | A-3 | A-4 | A-5 | A-6 | A-7 | A-8 |
|--------|-----|-----|-----|-----|-----|-----|-----|-----|
| D/G | 0.33 | 0.12 | 0.06 | 0.04 | 0.03 | 0.29 | 0.08 | 0.03 |
| P1 | 257 | 257 | 257 | 257 | 201 | 257 | 257 | 201 |
| P2 | 242 | 242 | 242 | 201 | 257 | 242 | 242 | 257 |
| A-9 | A-11 | A-12 | A-13 | A-14 | A-15 | A-16 | | |
| 0.07 | 0.03 | 0.05 | 0.08 | 0.29 | 0.09 | 0.09 | | |
| 257 | 201 | 257 | 257 | 257 | 257 | 257 | | |

(continued)

| A-9 | A-11 | A-12 | A-13 | A-14 | A-15 | A-16 |
|---|---|---|---|---|---|---|
| 242 | 257 | 201 | 242 | 242 | 242 | 242 |

Note
D/G: Ratio between D-band peak height D and G-band peak height G
P1: Position of the highest peak in RBM (i.e., 150 to 300 cm$^{-1}$) during the Raman spectral analysis at an excitation wavelength of 488 nm.
P2: Position of the second highest peak in RBM (i.e., 150 to 300 cm$^{-1}$) during the Raman spectral analysis at an excitation wavelength of 488 nm.

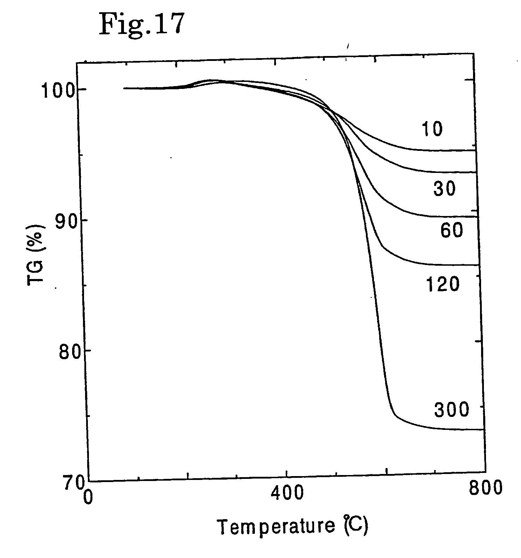

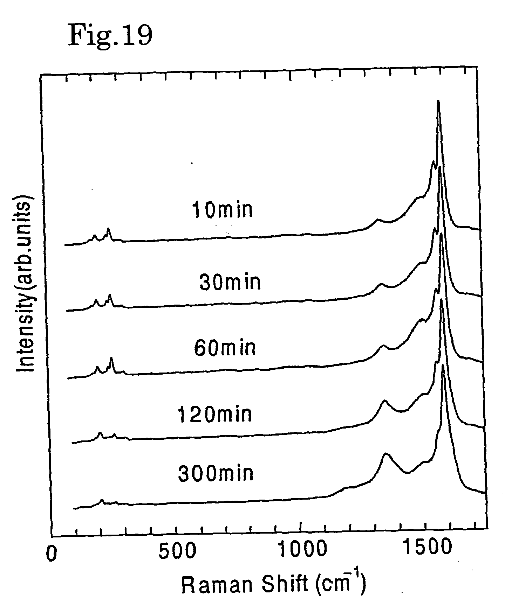

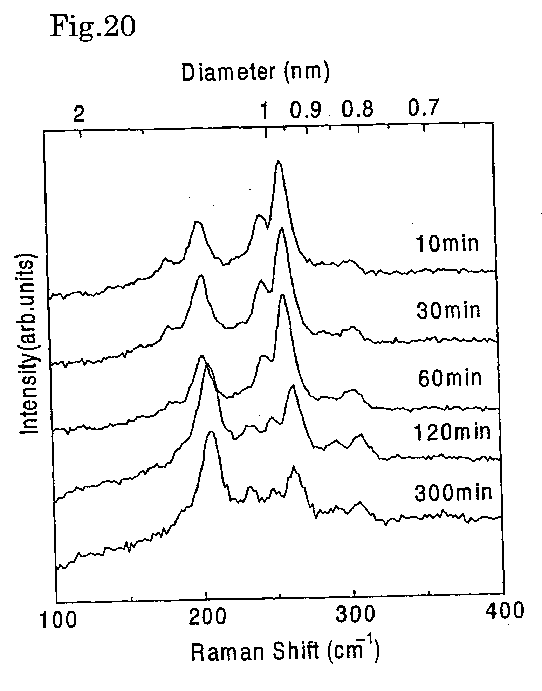

TG and DTG results for single-walled carbon nanotubes A-17 to A-21 are shown in Figure 17 and Figure 18 respectively, and the Raman spectra analysis results are shown in Figure 19. In addition, the diameter distribution of the single-walled carbon nanotubes obtained by the Raman distribution of the single-walled carbon nanotubes obtained by the Raman spectra analysis is shown in Figure 20.

Even if the reaction time is increased, it can be seen from Figure 17 and Table 8 that there is almost no increase in the volume of amorphous carbon derived therefrom and that only single-walled carbon nanotubes increase monotonously. Furthermore, Figure 18 shows that the oxidative degeneration temperature of single-walled carbon nanotubes rises to 543°C, 557°C, 565°C, 563°C and 587°C as the reaction time is increased to 10, 30, 60, 120, and 300 minutes respectively. In addition, the half value width reduces to 162°C, 112°C, 94°C, 83°C and 59°C respectively. As shown by the diameter distribution in Figure 20, this is considered to occur as a result of the uniform generation of relatively thick nanotubes (i.e., the oxidative degeneration temperature is high).

Table 8

| Catalyst | Heating temp. (°C) | Heating time (min) | Single-walled CNT | Yield (%) |
|---|---|---|---|---|
| Fe/Co | 800 | 10 | A-17 | 3.4 |
| Fe/Co | 800 | 30 | A-18 | 5.2 |
| Fe/Co | 800 | 60 | A-19 | 8.2 |
| Fe/Co | 800 | 120 | A-20 | 11.9 |
| Fe/Co | 800 | 300 | A-21 | 25.2 |

Embodiment 8

Under the process similar to those in embodiment 7, except for setting an ethanol pressure to 5 Torr (0.67 kPa), black powder - more specifically, single-walled carbon nanotubes A-22 to A-26 - were obtained. The electrical furnace temperature and the derived results are shown in Table 9.

Table 9

| Catalyst | Heating temp. (°C) | Heating time (min) | Single-walled CNT | Yield (%) |
|---|---|---|---|---|
| Fe/Co | 800 | 10 | A-22 | 3.5 |
| Fe/Co | 800 | 30 | A-23 | 5.2 |
| Fe/Co | 800 | 60 | A-24 | 6.4 |
| Fe/Co | 800 | 120 | A-25 | 9.4 |
| Fe/Co | 800 | 300 | A-26 | 17.1 |

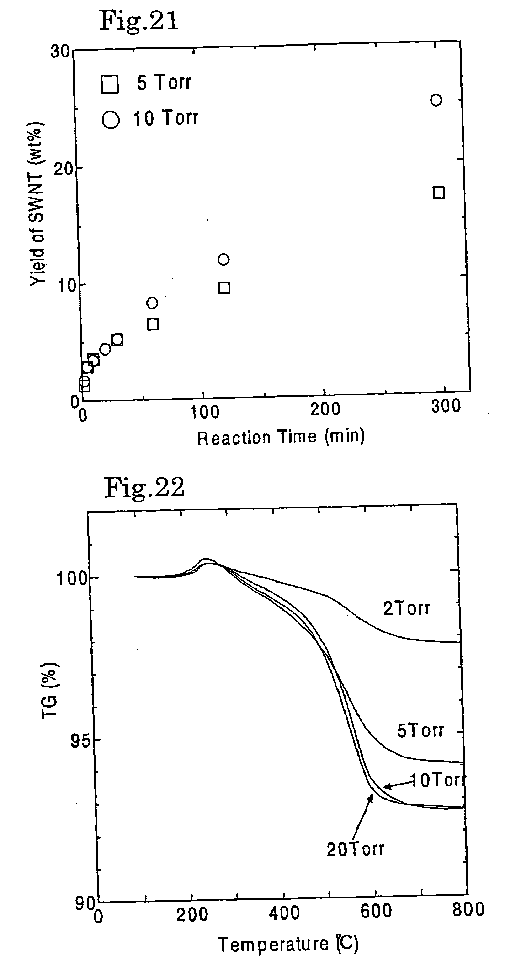

Figure 21 shows the dependence on reaction time of the yield of single-walled carbon nanotubes in embodiment 7 and embodiment 8. As the reaction time is increased, the yield increases almost monotonously, and the yield reaches 25% by weight (at 10 Torr (1.3 kPa) for 300 minutes) at its maximum. At this time, the ratio of single-walled carbon nanotubes to the catalyst metal reaches 500%, and this far surpasses the yield achieved by other currently known production processes for single-walled carbon nanotubes.

Embodiment 9

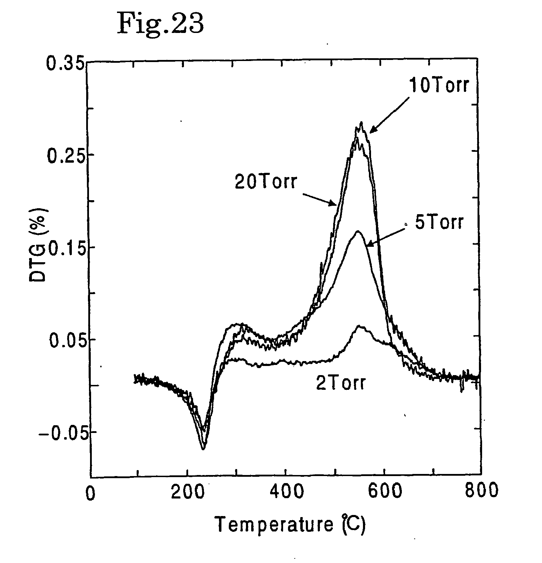

Testing was carried out by varying the pressure under the identical process to those described in embodiment 5, and the TGA was measured. TGA and DTG are shown in Figure 22 and Figure 23 respectively.

Although the yield of single-walled carbon nanotubes increases as the ethanol pressure is increased from 2 Torr (0.27 kPa), the increase stops at 10 Torr (1.3 kPa) or over, and between 10 Torr (1.3 kPa) and 20 Torr (2.7 kPa), the yield is approximately identical. As also described in embodiment 5, it is considered that insufficient annealing time for single-walled carbon nanotubes caused by the raised pressure deprives the yield of further increase.

Embodiment 10

The pale-yellow powder catalyst prepared in embodiment 1 put on a quartz board was placed inside a quartz tube in an electrical furnace. While the internal temperature of the electrical furnace rose to 800°C (approximately for 30 minutes), an argon atmosphere was maintained within the quartz tube (27-mm internal diameter). Specifically, the argon gas was introduced at a flow rate of 200 sccm.

After the temperature reached 800°C, the argon-gas flow rate was increased to 600 sccm, and the temperature and flow of the argon gas were maintained while bubbling ethanol (at 0°C) for 30 minutes, an ethanol atmosphere was created within the system. The partial pressure of ethanol during the process was a steam pressure at 0°C of 12 Torr (1.6 kPa) and a flow of approximately 10 sccm was achieved. Following this, the temperature was decreased to obtain black powder on the quartz board.

The Raman spectra analysis (at an excitation wavelength of 488 nm), SEM measurement and TEM observation of the obtained black powder showed that single-walled carbon nanotubes of high quality with diameters between 0.8 and 1.5 nm were achieved.

The position of the highest peak between 150 and 300 cm$^{-1}$ in the Raman spectrum measured at an excitation wavelength of 633 nm was 193 cm$^{-1}$.

Embodiment 11

The pale-yellow powder catalyst prepared in embodiment 1 put on a quartz board was placed inside a quartz tube in an electrical furnace. While the internal temperature of the electrical furnace rose to 800°C (approximately for 30 minutes), an argon atmosphere was maintained within the quartz tube (27-mm internal diameter). Specifically, the argon gas was introduced at a flow rate of 200 sccm.

After the temperature reached 800°C, the argon-gas flow rate was increased to 600 sccm, and the temperature and flow of the argon gas were maintained while bubbling ethanol (at -5°C) for 30 minutes, an ethanol atmosphere was created within the system. The partial pressure of ethanol during the process was a steam pressure at -5°C of between 5 and 10 Torr (0.67-1.3 kPa) and a flow of approximately 5-10 sccm. Following this, the temperature was decreased to obtain black powder on the quartz board.

The results of Raman spectra analysis (at an excitation wavelength of 488 nm), SEM measurement and TEM observation of the obtained black powder showed that single-walled carbon nanotubes of high quality with diameters between 0.8 and 1.5 nm were achieved.

The position of the highest peak between 150 and 300 cm$^{-1}$ in the Raman spectra at an excitation wavelength of 633 nm was 193 cm$^{-1}$.

Embodiment 12

The pale-yellow powder catalyst prepared in embodiment 1 put on a quartz board was placed inside a quartz tube in an electrical furnace. While the internal temperature of the electrical furnace rose to 850°C (approximately for 30 minutes), an atmosphere of argon and hydrogen (hydrogen: 3% by volume) was maintained within the quartz tube (27-mm internal diameter). Specifically, the gaseous mixture of argon and hydrogen was introduced at a flow of 200 seem.

After the temperature reached 850°C, the inside of the quartz tube was evacuated to create an ethanol atmosphere while maintaining the temperature. The time for creating the ethanol atmosphere was changed to 10, 60, and 120 minutes respectively. The partial pressure of ethanol during the process was 10 Torr (1.3 kPa), and a flow of approximately 300 sccm was achieved using a vacuum pump.

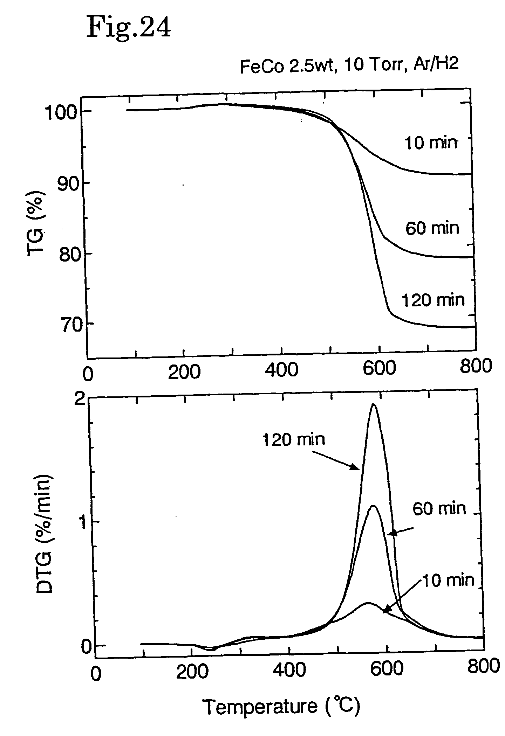

Figure 24 shows the TG and DTG results derived from the obtained sample when a thermal analysis was carried out in air with the temperature rising rate at 5°C per minute. The peak position on the linear differential curve of weight decrease by burning was 590°C and the half value width was 70°C. The yield obtained from TG in the same way as embodiment 7 was 32%, indicating approximate three times as high as the yield resulted from the same reaction time in embodiment 7.

Comparative Example 1

Single-walled carbon nanotubes (with catalyst metal removed) yielded by CNI's HipCO method were measured using Raman spectrum. The maximum RBM peak was 202 cm$^{-1}$ when measured at an excitation wavelength of 488 nm; 186 cm$^{-1}$ at an excitation wavelength of 514 nm; and 220 cm$^{-1}$ at an excitation wavelength of 633 nm. Note that no split was identified in items except that a shoulder appeared on G band in the Raman spectrum. The average diameter derived from the spectrum measured at an excitation wavelength of 488 nm was 1.21 nm.

APPLICATION FOR INDUSTRIAL USE

The present invention may be available for effective use in the production of carbon nanotubes and in the field of applications.

**Claims**

1. A process for producing single-walled carbon nanotubes, wherein a carbon source comprising an oxygenic organic material or a mixture of an oxygenic compound and a carbonic compound is brought into contact with a catalyst under a pressure or partial pressure of the carbon source of 0.01 to 27 kPa with heating to yield single-walled carbon nanotubes, wherein the oxygenic organic material is an alcohol and/or an ether.

2. The process for producing single-walled carbon nanotubes as claimed in claim 1, **characterized in that** a peak position of a linear differential curve of weight decrease by burning is obtained at 500°C or higher when the composition containing single-walled carbon nanotubes yielded above is thermally analyzed at a temperature rising rate of 5°C/min.

3. The process for producing single-walled carbon nanotubes as claimed in claim 1, **characterized in that** said oxygenic organic material is alcohol.

4. The process for producing single-walled carbon nanotubes as claimed in claim 1, **characterized in that** said oxygenic organic material is ether.

5. The process for producing single-walled carbon nanotubes as claimed in any of the claims 1 to 4, **characterized in that** said catalyst contains at least one kind of metal selected from the group comprising Fe, Co, Ni, Mo, Pt, Pd, Rh, Ir, Y, La, Ce, Pr, Nd, Gd, Tb, Dy, Ho, Er, and Lu.

6. The proccoo for producing single-walled carbon nanotubes as claimed in any of claims 1 to 5, **characterized in that** said catalyst in carried on a supporting material, and said supporting material is at least one kind selected from the groups of zeolite and magnesia.

7. The process for producing single-walled carbon nanotubes as claimed in claim 6, **characterized in that** said zeolite is a crystalline aluminosilicate and/or a dealuminized high-silica crystalline aluminosilicate.

8. The process for producing single-walled carbon nanotubes as claimed in any of claims 1 to 7, **characterized in that** said heating temperature is 500 to 1500°C and an average diameter of the yielded single-walled carbon nanotubes is increased in proportion to said heating temperature.

9. The process for producing single-walled carbon nanotubes as claimed in claim 8, **characterized in that** the pressure or partial pressure of the carbon source comprising the oxygenic organic material or the mixture of the oxygenic compound and the carbonic compound is 0.01 to 1.3 kPa ; said heating temperature is 500 to 700°C; and an average diameter of the produced single-walled carbon nanotube is 0.85 to 1.05 nm.

10. The process for producing single-walled carbon nanotubes as claimed in claim 8, **characterized in that** the pressure or partial pressure of the carbon source comprising the oxygenic organic material or the mixture of the oxygenic compound and the carbonic compound is 0.01 to 2.7 kPa ; said heating temperature is 700 to 800°C; and an average diameter of the yielded single-walled carbon nanotubes, is 0.9 to 1.2 nm.

11. The process for producing single-walled carbon nanotubes as claimed in claim 8, **characterized in that** the pressure or partial pressure of the carbon source comprising the oxygenic organic material or the mixture of the oxygenic compound and the carbonic compound is 0.01 to 6.7 KPa ; said heating temperature is 800 to 1000°C ; and an average diameter of the yielded single-walled carbon nanotubes is 0.95 to 1.3 nm.

12. The process for producing single-walled carbon nanotubes as claimed in any of the claims 1 to 11, **characterized in that** an average diameter of the produced single-walled carbon nanotubes is 0.80 to 1.30 nm when measured by the resonance Raman scattering measurement.

13. The process for producing single-walled carbon nanotubes as claimed in claim 1, comprising:

a) a step of arranging a catalyst in a reactor; and
b) a step of yielding carbon nanotubes by bringing at least one kind of oxygenic organic material selected from the group consisting of alcohols and ethers into contact with said catalyst under the condition of the pressure or partial pressure of the oxygenic organic material of 0.01 to 27 kPa and the temperature of 500 to 1500°C wherein said carbon nanotubes yielded above can be produced so as to adhere to one end of said catalyst and also 95% or more of the carbon nanotubes are single-walled carbon nanotubes.

14. The process for producing single-walled carbon nanotubes as claimed in claim 1, comprising:

a) a step of arranging a catalyst in a reactor;
b) a step of yielding carbon nanotubes by bringing at least one kind of oxygenic organic material selected from the group consisting of alcohols and ethers into contact with said catalyst under the condition of the pressure or partial pressure of the oxygenic organic material of 0.01 to 27 kPa, and the temperature of 500 to 1500°C, and
c) a step of recovering said oxygenic organic material after passing through said step b) and reusing said oxygenic organic material in said step b).

15. The process for producing single-walled carbon nanotubes as claimed in any of claims 13 to 14, **characterized in that** a peak position of a linear differential curve of weight decrease by burning is obtained at 500°C; or higher when the composition containing single-walled carbon nanotubes yielded above is thermally analyzed at a temperature rising rate of 5°C/min in the air.

16. The process for producing single-walled carbon nanotubes as claimed in any of claims 13 to 15, **characterized in that** said catalyst contains at least one kind of metal selected from the group comprising Fe, Co, Ni, Mo, Pt, Pd, Rh, Ir, Y, La, Ce, Pr, Nd, Gd, Tb, Dy, Ho, Er, and Lu.

17. The process for producing single-walled carbon nanotubes as claimed in any of claims 13 to 16, **characterised in that** said catalyst is supported on a supporting materials, and said supporting material is at least one kind selected from the groups of zeolite and magnesia.

18. The process for producing a single-walled carbon nanotube as claimed in claim 17, **characterized in that** said zeolite is a crystalline aluminosilicate, and/or a dealuminized high-silica crystalline aluminosilicate.

19. The process for producing single-walled carbon nanotubes as claimed in any of claims 13 to 18, **characterized in that** said heating temperature is 500 to 1500°C and an average diameter of the yielded carbon nanotubes is increased in proportion to said heating temperature.

20. The process for producing single-walled carbon nanotubes, as claimed in any of claims 13 to 19, **characterized in that** the pressure or partial pressure of said oxygenic organic material is 0.01 to 1.3 kPa ; said heating temperature is 500 to 700°C; and an average diameter of the yielded carbon nanotube is 0.85 to 1.05 nm.

21. The process for producing single-walled carbon nanotubes as claimed in any of claims 13 to 19, **characterized in that** the pressure or partial pressure of said oxygenic organic material is 0.01 to 2.7 kPa ; said heating temperature is 700 to 800°C; and an average diameter of the yielded carbon nanotubes is 0.9 to 1.2 nm.

22. The process for producing single-walled carbon nanotubes as claimed in any of claims 13 to 19, **characterized in that** the pressure or partial pressure of said oxygenic organic material is 0.01 to 6.7 kPa ; said heating temperature is 800 to 1000°C; and an average diameter of the yielded carbon nanotube is 0.95 to 1.3 nm.

23. The process for producing single-walled carbon nanotubes as claimed in any of claims 13 to 19, **characterized in that** the average diameter of the yielded carbon nanotube is 0.80 to 1.30 nm when measured by the resonance Raman scattering measurement.

24. The process for producing single-walled carbone nanotubes as claimed in claim 1, comprising

   a) a step of arranging a catalyst in a reactor;
   b) a step of making an inert gas and/or a reducing gas flow into the reactor while the inside of the reactor is heated up to a high temperature between 500 and 1500°C;
   c) a step of evacuating the inside of the reactor after it has reached the highest temperature; and
   d) a step of making at least one kind of oxygenic organic material selected from the alcohols and ethers flow into the reactor maintained at said high temperature so that its pressure or partial pressure is 0.01 to 27 kPa), and yielding carbon nanotubes by bringing the matter into contact with the catalyst so that the carbon nanotubes adhere to one end of the catalyst;

   wherein 95% or more of the carbon nanotubes that are yielded so as to adhere to one end of said catalyst are single-walled carbon nanotubes.

25. The process for producing single-walled carbon nanotubes as claimed in claim 24, **characterized in that** when the composition containing carbon nanotube made to adhere to one end of said catalyst is observed by a transmission electron microscope of $10^6$-magnification, at least 30% of a 100 nm square viewing area is occupied by the carbon nanotubes, and 95% or more of the carbon nanotube are single-walled carbon nanotubes.

26. The process for producing single-walled carbon nanotubes as claimed in any of claims 24 to 25, **characterised in that** a peak position of a linear differential curve of weight decrease by burning is obtained at 500°C or higher when the composition containing single-walled carbon nanotube yielded above is thermally analyzed at a temperature rising rate of 5°C/min in the air.

27. The process for producing single-walled carbon nanotubes as Claimed in any of claims 24 to 26, **characterized in that** said catalyst contains at least one kind of metal selected from the group consisting of Fe, Co, Ni, Mo, Pt, Pd, Rh, Ir, Y, La, Ce, Pr, Nd, Gd, Tb, Dy, Ho, Er, and Lu.

28. The process for producing single-walled carbon nanotubes as claimed in any of claims 24 to 27, **characterised in that** said supporting material is at least one kind selected from the groups of zeolite and magnesia.

29. The process for producing single-walled carbon nanotubes as claimed in any of claims 24 to 28, **characterized in that** said zeolite is a crystalline aluminosilicate and/or a dealuminized high-silica crystalline aluminosilicate.

30. The process for producing single-walled carbon nanotubes as claimed in any of claims 24 to 29, **characterized in that** said catalyst is made to flow in a reaction area.

31. The process for producing single-walled carbon nanotubes as claimed in any of claims 24 to 30, **characterized in that** the heating temperature is 500 to 1500°C; and the single-walled carbon nanotubes yielded are increased in average diameter in proportion to said heating temperature.

32. The process for producing single-walled carbon nanotubes as claimed in any of claims 24 to 31, **characterized in that** the pressure or partial pressure of said oxygenic organic materials is 0.01 to 1.3 kPa, the heating temperature is 500 to 700°C, and the single-walled carbon nanotubes are yielded so as to have an average diameter of 0.85 to 1.05 nm.

33. The process for producing single-walled carbon nanotubes as claimed in any of claims 24 to 31, **characterized in that** the pressure or partial pressure of said oxygenic organic material is 0.01 to 2.7 kPa, the heating temperature is 700 to 800°C, and the single-walled carbon nanotubes are yielded so as to have an average diameter of 0.9 to 1.2 nm.

34. The process for producing single-walled carbon nanotubes as claimed in any of claims 24 to 31, **characterized in that** the pressure or partial pressure of said oxygenic organic material is 0.01 to 6.7 kPa, the heating temperature is 800 to 1000°C, and the single-walled carbon nanotubes are yielded so as to have an average diameter of 0.95 to 1.3 nm.

35. The process for producing single-walled carbon nanotubes as claimed in any of claims 24 to 34, **characterized in that** an average diameter of said single-walled carbon nanotubes measured by the resonance Raman scattering measurement is 1.80 to 1.30 nm.

36. A composition containing single-walled carbon nanotubes satisfying the conditions mentioned below:

a) when the composition containing single-walled carbon nanotubes produced above is thermally analyze at temperature rising rate of 5°C/min, a peak position of a linear differential curve of weight decrease by burning is obtained at 500°C or higher, and the half value width of the peak is smaller than 170°C;
b) when the composition is observed by a transmission electron microscope of $10^6$ -magnification, single-walled carbon nanotubes are observed;
c) when the composition containing single-walled carbon nanotubes is observed by the resonance Roman scattering measurement at an excitation wavelength of 488 nm:

1) a G band is observed in the vicinity of 1590 cm$^{-1}$ and said G band is split;
2) a peak height in the vicinity of 1350 cm$^{-1}$, a D band, is one-third or lower of a peak height in the vicinity of 1590 cm$^{-1}$.

37. The composition containing single-walled carbon nanotubes as claimed in claim 36, **characterised in that** the maximum peak between 150 and 300 cm$^{-1}$ is present at 258 $\pm$ 5 cm$^{-1}$ when the composition containing single-walled carbon nanotubes is observed by a resonance Raman measurement at an excitation wavelength of 488 nm.

38. The composition containing single-walled carbon nanotubes as claimed in any of claims 36 to 37, **characterized in that** the maximum peak and the second maximum peak between 150 and 300 cm$^{-1}$ is obtained at the positions of 201 $\pm$ 5 cm$^{-1}$ and 258 $\pm$ 5 cm$^{-1}$, respectively, when the composition containing single-walled carbon nanotubes is observed by the resonance Raman measurement at an excitation wavelength of 488 nm.

39. The composition containing single-walled carbon nanotubes as claimed in any of claims 36 to 38, **characterized in that** the maximum peak between 150 and 300 cm$^{-1}$ is present at the position of 193 $\pm$ 5 cm$^{-1}$ when the composition containing single-walled carbon nanotubes is observed by a resonance Raman measurement at an excitation wavelength of 633 nm.

40. The composition containing single-walled carbon nanotubes, as claimed in any of claims 36 to 39, **characterized in that** the maximum peak between 150 and 300 cm$^{-1}$ is present at the position of 200 $\pm$ 5 cm$^{-1}$ when the composition containing single walled carbon nanotubes is observed by a resonance Raman measurement at an excitation wavelength of 633 nm.

**Patentansprüche**

1. Verfahren zur Herstellung von einwandigen Kohlenstoffnanoröhrchen, wobei eine Kohlenstoffquelle, die ein sauerstoffhaltiges organisches Material oder eine Mischung einer sauerstoffhaltigen Verbindung und einer kohlenstoffhaltigen Verbindung umfasst, in Kontakt mit einem Katalysator unter einem Druck oder Teildruck der Kohlenstoffquelle von 0,01 bis 27 kPa unter Erhitzen gebracht wird, um einwandige Kohlenstoffnanoröhrchen zu liefern, wobei das sauerstoffhaltige organische Material ein Alkohol und/oder Ether ist.

2. Verfahren zur Herstellung von einwandigen Kohlenstoffnanoröhrchen nach Anspruch 1, **dadurch gekennzeichnet, dass** eine Peakposition einer linearen Differentialkurve der Gewichtsabnahme durch Verbrennen bei 500 °C oder mehr erhalten wird, wenn die Zusammensetzung, die einwandige Kohlenstoffnanoröhrchen, die oben geliefert worden sind, enthält, mit einer Temperaturzunahmerate von 5 °C/min thermisch analysiert wird.

3. Verfahren zur Herstellung von einwandigen Kohlenstoffnanoröhrchen nach Anspruch 1, **dadurch gekennzeichnet, dass** das sauerstoffhaltige organische Material Alkohol ist.

4. Verfahren zur Herstellung von einwandigen Kohlenstoffnanoröhrchen nach Anspruch 1, **dadurch gekennzeichnet, dass** das sauerstoffhaltige organische Material Ether ist.

5. Verfahren zur Herstellung von einwandigen Kohlenstoffnanoröhrchen nach einem der Ansprüche 1 bis 4, **dadurch gekennzeichnet, dass** der Katalysator mindestens eine Art von Metall enthält ausgewählt aus der Gruppe umfassend Fe, Co, Ni, Mo, Pt, Pd, Rh, Ir, Y, La, Ce, Pr, Nd, Gd, Tb, Dy, Ho, Er und Lu.

6. Verfahren zur Herstellung von einwandigen Kohlenstoffnanoröhrchen nach einem der Ansprüche 1 bis 5, **dadurch gekennzeichnet, dass** der Katalysator auf einem Trägermaterial getragen wird und das Trägermaterial mindestens eine Art ist ausgewählt aus der Gruppe von Zeolith und Magnesiumoxid.

7. Verfahren zur Herstellung von einwandigen Kohlenstoffnanoröhrchen nach Anspruch 6, **dadurch gekennzeichnet, dass** der Zeolith ein kristallines Aluminosilicat und/oder ein dealuminisiertes kristallines Aluminosilicat von hohem Siliciumdioxidgehalt ist.

8. Verfahren zur Herstellung von einwandigen Kohlenstoffnanoröhrchen nach einem der Ansprüche 1 bis 7, **dadurch gekennzeichnet, dass** die Erhitzungstemperatur 500 bis 1500 °C beträgt und ein durchschnittlicher Durchmesser der gelieferten einwandigen Kohlenstoffnanoröhrchen proportional zu der Erhitzungstemperatur erhöht wird.

9. Verfahren zur Herstellung von einwandigen Kohlenstoffnanoröhrchen nach Anspruch 8, **dadurch gekennzeichnet, dass** der Druck oder Teildruck der Kohlenstoffquelle, die das sauerstoffhaltige organische Material oder die Mischung der sauerstoffhaltigen Verbindung und der kohlenstoffhaltigen Verbindung umfasst, 0,01 bis 1,3 kPa beträgt; wobei die Erhitzungstemperatur 500 bis 700 °C beträgt; und ein durchschnittlicher Durchmesser der hergestellten einwandigen Kohlenstoffnanoröhrchen 0,85 bis 1,05 nm beträgt.

10. Verfahren zur Herstellung von einwandigen Kohlenstoffnanoröhrchen nach Anspruch 8, **dadurch gekennzeichnet, dass** der Druck oder Teildruck der Kohlenstoffquelle, die das sauerstoffhaltige organische Material oder die Mischung der sauerstoffhaltigen Verbindung und der kohlenstoffhaltigen Verbindung umfasst, 0,01 bis 2,7 kPa beträgt; wobei die Erhitzungstemperatur 700 bis 800 °C beträgt; und ein durchschnittlicher Durchmesser der gelieferten einwandigen Kohlenstoffnanoröhrchen 0,9 bis 1,2 nm beträgt.

11. Verfahren zur Herstellung von einwandigen Kohlenstoffnanoröhrchen nach Anspruch 8, **dadurch gekennzeichnet, dass** der Druck oder Teildruck der Kohlenstoffquelle, die das sauerstoffhaltige organische Material oder die Mischung der sauerstoffhaltigen Verbindung und der kohlenstoffhaltigen Verbindung umfasst, 0,01 bis 6,7 kPa beträgt; wobei die Erhitzungstemperatur 800 bis 1000 °C beträgt; und ein durchschnittlicher Durchmesser der gelieferten einwandigen Kohlenstoffnanoröhrchen 0,95 bis 1,30 nm beträgt.

12. Verfahren zur Herstellung von einwandigen Kohlenstoffnanoröhrchen nach einem der Ansprüche 1 bis 11, **dadurch gekennzeichnet, dass** ein durchschnittlicher Durchmesser der hergestellten einwandigen Kohlenstoffnanoröhrchen 0,80 bis 1,30 nm beträgt, wenn er durch Resonanz-Raman-Streuungs-Messbestimmung gemessen wird.

13. Verfahren zur Herstellung von einwandigen Kohlenstoffnanoröhrchen nach Anspruch 1, umfassend:

a) einen Schritt des Anordnen eines Katalysators in einem Reaktor; und
b) einen Schritt des Liefern von Kohlenstoffnanoröhrchen durch Bringen mindestens einer Art von sauerstoffhaltigem organischem Material ausgewählt aus der Gruppe bestehend aus Alkoholen und Ethern, in Kontakt mit dem Katalysator unter der Bedingung des Drucks oder Teildrucks des sauerstoffhaltigen organischen Materials von 0,01 bis 27 kPa und der Temperatur von 500 bis 1500 °C; wobei die oben gelieferten Kohlenstoffnanoröhrchen so hergestellt werden können, dass sie an einem Ende des Katalysators anhaften und auch 95 % oder mehr der Kohlenstoffnanoröhrchen einwandige Kohlenstoffnanoröhrchen sind.

14. Verfahren zur Herstellung von einwandigen Kohlenstoffnanoröhrchen nach Anspruch 1, umfassend:

a) einen Schritt des Anordnen eines Katalysators in einem Reaktor; und
b) einen Schritt des Liefers von Kohlenstoffnanoröhrchen durch Bringen mindestens einer Art von sauerstoffhaltigem organischem Material ausgewählt aus der Gruppe bestehend aus Alkoholen und Ethern, in Kontakt mit dem Katalysator unter der Bedingung des Drucks oder Teildrucks des sauerstoffhaltigen organischen Materials von 0,01 bis 27 kPa und der Temperatur von 500 bis 1500 °C; und
c) einen Schritt des Gewinnens des sauerstoffhaltigen organischen Materials nach Hindurchgehen durch den Schritt b) und Verwenden des sauerstoffhaltigen organischen Materials in Schritt b).

15. Verfahren zur Herstellung von einwandigen Kohlenstoffnanoröhrchen nach einem der Ansprüche 13 bis 14, **dadurch gekennzeichnet, dass** eine Peakposition einer linearen Differentialkurve der Gewichtsabnahme durch Verbrennen bei 500 °C oder mehr erhalten wird, wenn die Zusammensetzung, die einwandige Kohlenstoffnanoröhrchen, die oben geliefert worden sind, enthält, mit einer Temperaturzunahmerate von 5 °C/min in der Luft thermisch analysiert wird.

16. Verfahren zur Herstellung von einwandigen Kohlenstoffnanoröhrchen nach einem der Ansprüche 13 bis 15, **dadurch gekennzeichnet, dass** der Katalysator mindestens eine Art von Metall enthält ausgewählt aus der Gruppe umfassend Fe, Co, Ni, Mo, Pt, Pd, Rh, Ir, Y, La, Ce, Pr, Nd, Gd, Tb, Dy, Ho, Er und Lu.

17. Verfahren zur Herstellung von einwandigen Kohlenstoffnanoröhrchen nach einem der Ansprüche 13 bis 16, **dadurch gekennzeichnet, dass** der Katalysator auf einem Trägermaterial getragen wird und das Trägermaterial mindestens eine Art ist ausgewählt aus der Gruppe von Zeolith und Magnesiumoxid.

18. Verfahren zur Herstellung eines einwandigen Kohlenstoffnanoröhrchens nach Anspruch 17, **dadurch gekennzeichnet, dass** der Zeolith ein kristallines Aluminosilicat und/oder ein dealuminisiertes kristallines Aluminosilicat von hohem Siliciumdioxidgehalt ist.

19. Verfahren zur Herstellung von einwandigen Kohlenstoffnanoröhrchen nach einem der Ansprüche 13 bis 18, **dadurch gekennzeichnet, dass** die Erhitzungstemperatur 500 bis 1500 °C beträgt und ein durchschnittlicher Durchmesser der gelieferten Kohlenstoffnanoröhrchen proportional zu der Erhitzungstemperatur erhöht wird.

20. Verfahren zur Herstellung von einwandigen Kohlenstoffnanoröhrchen nach einem der Ansprüche 13 bis 19, **dadurch gekennzeichnet, dass** der Druck oder Teildruck des sauerstoffhaltigen organischen Materials 0,01 bis 1,3 kPa beträgt; wobei die Erhitzungstemperatur 500 bis 700 °C beträgt; und ein durchschnittlicher Durchmesser der gelieferten Kohlenstoffnanoröhrchen 0,85 bis 1,05 nm beträgt.

21. Verfahren zur Herstellung von einwandigen Kohlenstoffnanoröhrchen nach einem der Ansprüche 13 bis 19, **dadurch gekennzeichnet, dass** der Druck oder Teildruck des sauerstoffhaltigen organischen Materials 0,01 bis 2,7 kPa beträgt; wobei die Erhitzungstemperatur 700 bis 800 °C beträgt; und ein durchschnittlicher Durchmesser der gelieferten Kohlenstoffnanoröhrchen 0,9 bis 1,2 nm beträgt.

22. Verfahren zur Herstellung von einwandigen Kohlenstoffnanoröhrchen nach einem der Ansprüche 13 bis 19, **dadurch gekennzeichnet, dass** der Druck oder Teildruck des sauerstoffhaltigen organischen Materials 0,01 bis 6,7 kPa beträgt; wobei die Erhitzungstemperatur 800 bis 1000 °C beträgt; und ein durchschnittlicher Durchmesser der gelieferten Kohlenstoffnanoröhrchen 0,95 bis 1,3 nm beträgt.

23. Verfahren zur Herstellung von einwandigen Kohlenstoffnanoröhrchen nach einem der Ansprüche 13 bis 19, **dadurch gekennzeichnet, dass** der durchschnittliche Durchmesser der gelieferten Kohlenstoffnanoröhrchen 0,80 bis 1,30 nm beträgt, wenn er durch Resonanz-Raman-Streuungs-Messbestimmung gemessen wird.

24. Verfahren zur Herstellung von einwandigen Kohlenstoffnanoröhrchen nach Anspruch 1, umfassend:

a) einen Schritt des Anordnen eines Katalysators in einem Reaktor; und
b) einen Schritt des Verursachens, dass ein inertes Gas und/oder ein reduzierendes Gas in den Reaktor strömt, während die Innenseite des Reaktors auf eine hohe Temperatur zwischen 500 und 1500 °C erhitzt wird;
c) einen Schritt des Evakuierens der Innenseite des Reaktors, nachdem sie die höchste Temperatur erreicht hat; und
d) einen Schritt des Verursachens, dass mindestens eine Art von sauerstoffhaltigem organischem Material ausgewählt aus den Alkoholen und Ethern, in den Reaktor strömt, der bei der hohen Temperatur gehalten wird, so das sein Druck oder Teildruck 0,01 bis 27 kPa beträgt, und Kohlenstoffnanoröhrchen durch Inkontaktbringen der Substanz mit dem Katalysator geliefert werden, so dass die Kohlenstoffnanoröhrchen an einem Ende des Katalysators anhaften;

wobei 95 % oder mehr der Kohlenstoffnanoröhrchen, die geliefert werden, um an einem Ende des Katalysators anzuhaften, einwandige Kohlenstoffnanoröhrchen sind.

25. Verfahren zur Herstellung von einwandigen Kohlenstoffnanoröhrchen nach Anspruch 24, **dadurch gekennzeichnet,**

**dass**, wenn die Zusammensetzung, die Kohlenstoffnanoröhrchen enthält, die zum Anhaften an einem Ende des Katalysators gebracht werden, durch ein Strahlungselektronenmikroskop einer Vergrößerung von $10^6$ beobachtet wird, mindestens 30 % eines 100 nm Quadrat großen Beobachtungsbereichs durch die Kohlenstoffnanoröhrchen eingenommen werden, und 95 % oder mehr der Kohlenstoffnanoröhrchen einwandige Kohlenstoffnanoröhrchen sind.

26. Verfahren zur Herstellung von einwandigen Kohlenstoffnanoröhrchen nach einem der Ansprüche 24 bis 25, **dadurch gekennzeichnet, dass** die Peakposition einer linearen Differentialkurve von Gewichtsabnahme durch Verbrennen bei 500 °C oder mehr erhalten wird, wenn die Zusammensetzung, die einwandige Kohlenstoffnanoröhrchen, die oben geliefert worden sind, enthält, mit einer Temperaturzunahmerate von 5 °C/min thermisch analysiert wird.

27. Verfahren zur Herstellung von einwandigen Kohlenstoffnanoröhrchen nach einem der Ansprüche 24 bis 26, **dadurch gekennzeichnet, dass** der Katalysator mindestens eine Art von Metall enthält ausgewählt aus der Gruppe bestehend aus Fe, Co, Ni, Mo, Pt, Pd, Rh, Ir, Y, La, Ce, Pr, Nd, Gd, Tb, Dy, Ho, Er und Lu.

28. Verfahren zur Herstellung von einwandigen Kohlenstoffnanoröhrchen nach einem der Ansprüche 24 bis 27, **dadurch gekennzeichnet, dass** das Trägermaterial mindestens eine Art ist ausgewählt aus der Gruppe von Zeolith und Magnesiumoxid.

29. Verfahren zur Herstellung von einwandigen Kohlenstoffnanoröhrchen nach einem der Ansprüche 24 bis 28, **dadurch gekennzeichnet, dass** der Zeolith ein kristallines Aluminosilicat und/oder ein dealuminisiertes kristallines Aluminosilicat von hohem Siliciumdioxidgehalt ist.

30. Verfahren zur Herstellung von einwandigen Kohlenstoffnanoröhrchen nach einem der Ansprüche 24 bis 29, **dadurch gekennzeichnet, dass** der Katalysator dazu gebracht wird, in einem Reaktionsbereich zu strömen.

31. Verfahren zur Herstellung von einwandigen Kohlenstoffnanoröhrchen nach einem der Ansprüche 24 bis 30, **dadurch gekennzeichnet, dass dadurch gekennzeichnet** die Erhitzungstemperatur 500 bis 1500 °C beträgt und die gelieferten einwandigen Kohlenstoffnanoröhrchen bezüglich des durchschnittlichen Durchmessers proportional zu der Erhitzungstemperatur t vergrößert werden.

32. Verfahren zur Herstellung von einwandigen Kohlenstoffnanoröhrchen nach einem der Ansprüche 24 bis 31, **dadurch gekennzeichnet, dass** der Druck oder Teildruck des sauerstoffhaltigen organischen Materials 0,01 bis 1,3 kPa beträgt; wobei die Erhitzungstemperatur 500 bis 700 °C beträgt; und die einwandigen Kohlenstoffnanoröhrchen so geliefert werden, dass sie einen durchschnittlichen Durchmesser von 0,85 bis 1,05 nm aufweisen.

33. Verfahren zur Herstellung von einwandigen Kohlenstoffnanoröhrchen nach einem der Ansprüche 24 bis 31, **dadurch gekennzeichnet, dass** der Druck oder Teildruck des sauerstoffhaltigen organischen Materials 0,01 bis 2,7 kPa beträgt, die Erhitzungstemperatur 700 bis 800 °C beträgt und die einwandigen Kohlenstoffnanoröhrchen so geliefert werden, dass sie einen durchschnittlichen Durchmesser von 0,9 bis 1,02 nm aufweisen.

34. Verfahren zur Herstellung von einwandigen Kohlenstoffnanoröhrchen nach einem der Ansprüche 24 bis 31, **dadurch gekennzeichnet, dass** der Druck oder Teildruck des sauerstoffhaltigen organischen Materials 0,01 bis 6,7 kPa beträgt, die Erhitzungstemperatur 800 bis 1000 °C beträgt und die einwandten Kohlenstoffnanoröhrchen so geliefert werden, dass sie einen durchschnittlichen Durchmesser von 0,95 bis 1,3 nm aufweisen.

35. Verfahren zur Herstellung von einwandigen Kohlenstoffnanoröhrchen nach einem der Ansprüche 24 bis 34, **dadurch gekennzeichnet, dass** ein durchschnittlicher Durchmesser der einwandigen Kohlenstoffnanoröhrchen, durch Resonanz-Raman-Streuungs-Messbestimmung gemessen, 1,80 bis 1,30 nm beträgt.

36. Verfahren zur Herstellung von einwandigen Kohlenstoffnanoröhrchen, die den unten erwähnten Bedingungen entsprechen:

a) wenn die Zusammensetzung, die die einwandigen, oben hergestellten Kohlenstoffnanoröhrchen enthält, mit einer Temperaturzunahmerate von 5 °C/min thermisch analysiert wird, eine Peakposition einer linearen Differentialkurve von Gewichtsabnahme durch Verbrennen bei 500 °C oder mehr erhalten wird, und die Halbwertbreite des Peaks kleiner als 170 °C ist;
b) wenn die Zusammensetzung durch ein Strahlungselektronenmikroskop einer Vergrößerung von $10^6$ beob-

achtet wird, einwandige Kohlenstoffnanoröhrchen beobachtet werden;

c) wenn die Zusammensetzung, die einwandige Kohlenstoffnanoröhrchen enthält, durch Resonanz-Raman-Streuungs-Messbestimmung bei einer Anregungswellenlänge von 488 nm beobachtet wird;

1) wird eine G-Bande in der Nähe von 1590 cm$^{-1}$ beobachtet und die G-Bande ist gespalten;

2) eine Peak-Höhe in der Nähe von 1350 cm$^{-1}$, eine D-Bande, beträgt ein Drittel oder weniger einer Peak-Höhe in der Nähe von 1590 cm$^{-1}$.

37. Zusammensetzung enthaltend einwandige Kohlenstoffnanoröhrchen nach Anspruch 36, **dadurch gekennzeichnet, dass** der maximale Peak zwischen 150 und 300 cm$^{-1}$ bei 258 $\pm$ 5 cm$^{-1}$ vorliegt, wenn die Zusammensetzung, die einwandige Kohlenstoffnanoröhrchen enthält, durch Resonanz-Raman-Streuungs-Messbestimmung bei einer Anregungswellenlänge von 488 nm beobachtet wird.

38. Zusammensetzung enthaltend einwandige Kohlenstoffnanoröhrchen nach einem der Ansprüche 36 bis 37, **dadurch gekennzeichnet, dass** der maximale Peak und der zweite maximale Peak zwischen 150 und 300 cm$^{-1}$ an den Positionen von 201 $\pm$ 5 cm$^{-1}$ bzw. 258 $\pm$ 5 cm$^{-1}$ erhalten werden, wenn die Zusammensetzung, die einwandige Kohlenstoffnanoröhrchen enthält, durch Resonanz-Raman-Streuungs-Messbestimmung bei einer Anregungswellenlänge von 488 nm beobachtet wird.

39. Zusammensetzung enthaltend einwandige Kohlenstoffnanoröhrchen nach einem der Ansprüche 36 bis 38, **dadurch gekennzeichnet, dass** der maximale Peak zwischen 150 und 300 cm$^{-1}$ an der Position von 193 $\pm$ 5 cm$^{-1}$ vorliegt, wenn die Zusammensetzung, die einwandige Kohlenstoffnanoröhrchen enthält, durch Resonanz-Raman-Streuungs-Messbestimmung bei einer Anregungswellenlänge von 633 nm beobachtet wird.

40. Zusammensetzung enthaltend einwandige Kohlenstoffnanoröhrchen nach einem der Ansprüche 36 bis 39, **dadurch gekennzeichnet, dass** der maximale Peak zwischen 150 und 300 cm$^{-1}$ an der Position von 280 $\pm$ 5 cm$^{-1}$ vorliegt, wenn die Zusammensetzung, die einwandige Kohlenstoffnanoröhrchen enthält, durch Resonanz-Raman-Streuungs-Messbestimmung bei einer Anregungswellenlänge von 633 nm beobachtet wird.

## Revendications

1. Procédé de production de nanotubes de carbone à paroi simple, dans lequel une source de carbone comprenant une substance organique oxygénée ou un mélange d'un composé oxygéné et d'un composé carbonique est mise en contact avec un catalyseur sous une pression ou une pression partielle de la source de carbone de 0,01 à 27 kPa avec chauffage pour donner les nanotubes de carbone à paroi simple, dans lequel la substance organique oxygénée est un alcool et/ou un éther.

2. Procédé de production de nanotubes de carbone à paroi simple selon la revendication 1, **caractérisé en ce qu'**une position de pic d'une courbe différentielle linéaire de diminution de poids par cuisson est obtenue à 500 °C ou plus lorsque la composition contenant des nanotubes de carbone à paroi simple obtenue ci-dessus est analysée thermiquement à une vitesse d'augmentation de température de 5 °C/min.

3. Procédé de production de nanotubes de carbone à paroi simple selon la revendication 1, **caractérisé en ce que** ladite substance organique oxygénée est un alcool.

4. Procédé de production de nanotubes de carbone à paroi simple selon la revendication 1, **caractérisé en ce que** ladite substance organique oxygénée est un éther.

5. Procédé de production de nanotubes de carbone à paroi simple selon l'une quelconque des revendications 1 à 4, **caractérisé en ce que** ledit catalyseur contient au moins un type de métal choisi dans le groupe comprenant Fe, Co, Ni, Mo, Pt, Pd, Rh, Ir, Y, La, Ce, Pr, Nd, Gd, Tb, Dy, Ho, Er et Lu.

6. Procédé de production de nanotubes de carbone à paroi simple selon l'une quelconque des revendications 1 à 5, **caractérisé en ce que** ledit catalyseur est transporté sur un matériau de support, et ledit matériau de support est au moins un type choisi dans le groupe de la zéolite et de la magnésie.

7. Procédé de production de nanotubes de carbone à paroi simple selon la revendication 6, **caractérisé en ce que** ladite zéolite est un aluminosilicate cristallin et/ou un aluminosilicate cristallin riche en silice désaluminé.

8. Procédé de production de nanotubes de carbone à paroi simple selon l'une quelconque des revendications 1 à 7, **caractérisé en ce que** ladite température de chauffage est de 500 à 1500 °C et un diamètre moyen des nanotubes de carbone à paroi simple produits est augmenté proportionnellement à ladite température de chauffage.

9. Procédé de production de nanotubes de carbone à paroi simple selon la revendication 8, **caractérisé en ce que** la pression ou la pression partielle de la source de carbone comprenant la substance organique oxygénée ou le mélange du composé oxygéné et du composé carbonique est de 0,01 à 1,3 kPa; ladite température de chauffage est de 500 à 700 °C; et un diamètre moyen des nanotubes de carbone à paroi simple produits est de 0,85 à 1,05 nm.

10. Procédé de production de nanotubes de carbone à paroi simple selon la revendication 8, **caractérisé en ce que** la pression ou la pression partielle de la source de carbone comprenant la substance organique oxygénée ou le mélange du composé oxygéné et du composé carbonique est de 0,01 à 2,7 kPa; ladite température de chauffage est de 700 à 800 °C; et un diamètre moyen des nanotubes de carbone à paroi simple produits est de 0,9 à 1,2 nm.

11. Procédé de production de nanotubes de carbone à paroi simple selon la revendication 8, **caractérisé en ce que** la pression ou la pression partielle de la source de carbone comprenant la substance organique oxygénée ou le mélange du composé oxygéné et du composé carbonique est de 0,01 à 6,7 kPa; ladite température de chauffage est de 800 à 1000 °C ; et un diamètre moyen des nanotubes de carbone à paroi simple produits est de 0,95 à 1,3 nm.

12. Procédé de production de nanotubes de carbone à paroi simple selon l'une quelconque des revendications 1 à 11, **caractérisé en ce qu'**un diamètre moyen des nanotubes de carbone à paroi simple produits est de 0,80 à 1,30 nm lorsqu'il est mesuré par la mesure de la diffusion Raman de résonance.

13. Procédé de production de nanotubes de carbone à paroi simple selon la revendication 1, comprenant :

 a) une étape de disposition d'un catalyseur dans un réacteur ; et
 b) une étape de production de nanotubes de carbone par la mise en contact d'au moins un type d'une substance organique oxygénée choisie dans le groupe constitué par les alcools et les éthers avec ledit catalyseur dans des conditions de pression ou de pression partielle de la substance organique oxygénée de 0,01 à 27 kPa et de température de 500 à 1500 °C; dans lequel lesdits nanotubes de carbone produits ci-dessus peuvent être produits de sorte à adhérer à une extrémité dudit catalyseur et également 95 % ou plus des nanotubes de carbone sont des nanotubes de carbone à paroi simple.

14. Procédé de production de nanotubes de carbone à paroi simple selon la revendication 1, comprenant :

 a) une étape de disposition d'un catalyseur dans un réacteur ; et
 b) une étape de production de nanotubes de carbone par la mise en contact d'au moins un type d'une substance organique oxygénée choisie dans le groupe constitué par les alcools et les éthers avec ledit catalyseur dans des conditions de pression ou de pression partielle de la substance organique oxygénée de 0,01 à 27 kPa et de température de 500 à 1500 °C ; et
 c) une étape de récupération de ladite substance organique oxygénée après le passage dans ladite étape b) et de réutilisation de ladite substance organique oxygénée dans ladite étape b).

15. Procédé de production de nanotubes de carbone à paroi simple selon l'une quelconque des revendications 13 à 14, **caractérisé en ce qu'**une position de pic d'une courbe différentielle linéaire de diminution de poids par cuisson est obtenue à 500 °C ou plus lorsque la composition contenant des nanotubes de carbone à paroi simple obtenue ci-dessus est analysée thermiquement à une vitesse d'augmentation de température de 5 °C/min dans l'air.

16. Procédé de production de nanotubes de carbone à paroi simple selon l'une quelconque des revendications 13 à 15, **caractérisé en ce que** ledit catalyseur contient au moins un type de métal choisi dans le groupe comprenant Fe, Co, Ni, Mo, Pt, Pd, Rh, Ir, Y, La, Ce, Pr, Nd, Gd, Tb, Dy, Ho, Er et Lu.

17. Procédé de production de nanotubes de carbone à paroi simple selon l'une quelconque des revendications 13 à 16, **caractérisé en ce que** ledit catalyseur est transporté sur un matériau de support, et ledit matériau de support est au moins un type choisi dans le groupe de la zéolite et de la magnésie.

**18.** Procédé de production de nanotubes de carbone à paroi simple selon la revendication 17, **caractérisé en ce que** ladite zéolite est un aluminosilicate cristallin et/ou un aluminosilicate cristallin riche en silice désaluminé.

**19.** Procédé de production de nanotubes de carbone à paroi simple selon l'une quelconque des revendications 13 à 18, **caractérisé en ce que** ladite température de chauffage est de 500 à 1500 °C et un diamètre moyen des nanotubes de carbone à paroi simple produits est augmenté proportionnellement à ladite température de chauffage.

**20.** Procédé de production de nanotubes de carbone à paroi simple selon l'une quelconque des revendications 13 à 19, **caractérisé en ce que** la pression ou la pression partielle de ladite substance organique oxygénée est de 0,01 à 1,3 kPa; ladite température de chauffage est de 500 à 700 °C ; et un diamètre moyen des nanotubes de carbone produits est de 0,85 à 1,05 nm.

**21.** Procédé de production de nanotubes de carbone à paroi simple selon l'une quelconque des revendications 13 à 19, **caractérisé en ce que** la pression ou la pression partielle de ladite substance organique oxygénée est de 0,01 à 2,7 kPa; ladite température de chauffage est de 700 à 800 °C ; et un diamètre moyen des nanotubes de carbone produits est de 0,9 à 1,2 nm.

**22.** Procédé de production de nanotubes de carbone à paroi simple selon l'une quelconque des revendications 13 à 19, **caractérisé en ce que** la pression ou la pression partielle de ladite substance organique oxygénée est de 0,01 à 6,7 kPa; ladite température de chauffage est de 800 à 1000 °C; et un diamètre moyen des nanotubes de carbone produits est de 0,95 à 1,3 nm.

**23.** Procédé de production de nanotubes de carbone à paroi simple selon l'une quelconque des revendications 13 à 19, **caractérisé en ce qu'**un diamètre moyen des nanotubes de carbone produits est de 0,80 à 1,30 nm lorsqu'il est mesuré par la mesure de la diffusion Raman de résonance.

**24.** Procédé de production de nanotubes de carbone à paroi simple selon la revendication 1, comprenant :

a) une étape de disposition d'un catalyseur dans un réacteur ;
b) une étape d'écoulement d'un gaz inerte et/ou d'un gaz réducteur dans le réacteur tandis que l'intérieur du réacteur est chauffé jusqu'à une température élevée comprise entre 500 et 1500 °C ;
c) une étape d'évacuation de l'intérieur du réacteur après avoir atteint la température la plus élevée ; et
d) une étape d'écoulement d'au moins un type d'une substance organique oxygénée choisie parmi les alcools et les éthers dans le réacteur maintenu à ladite température élevée de sorte que sa pression ou sa pression partielle soit de 0,01 à 27 kPa, et de production de nanotubes de carbone en amenant la matière en contact avec le catalyseur de sorte que les nanotubes de carbone adhèrent à une extrémité du catalyseur ;

dans lequel 95 % ou plus des nanotubes de carbone qui sont produits de sorte à adhérer à une extrémité dudit catalyseur sont des nanotubes de carbone à paroi simple.

**25.** Procédé de production de nanotubes de carbone à paroi simple selon la revendication 24, **caractérisé en ce que** lorsque la composition contenant des nanotubes de carbone produits pour adhérer à une extrémité dudit catalyseur est observée par un microscope électronique à transmission de grossissement $10^6$, au moins 30 % d'une surface de visualisation de 100 $nm^2$ est occupée par les nanotubes de carbone et, 95 % ou plus des nanotubes de carbone sont des nanotubes de carbone à paroi simple.

**26.** Procédé de production de nanotubes de carbone à paroi simple selon l'une quelconque des revendications 24 à 25, **caractérisé en ce qu'**une position de pic d'une courbe différentielle linéaire de diminution de poids par cuisson est obtenue à 500 °C ou plus lorsque la composition contenant des nanotubes de carbone à paroi simple obtenue ci-dessus est analysée thermiquement à une vitesse d'augmentation de température de 5 °C/min dans l'air.

**27.** Procédé de production de nanotubes de carbone à paroi simple selon l'une quelconque des revendications 24 à 26, **caractérisé en ce que** ledit catalyseur contient au moins un type de métal choisi dans le groupe comprenant Fe, Co, Ni, Mo, Pt, Pd, Rh, Ir, Y, La, Ce, Pr, Nd, Gd, Tb, Dy, Ho, Er et Lu.

**28.** Procédé de production de nanotubes de carbone à paroi simple selon l'une quelconque des revendications 24 à 27, **caractérisé en ce que** ledit matériau de support est au moins un type choisi dans le groupe de la zéolite et de la magnésie.

**29.** Procédé de production de nanotubes de carbone à paroi simple selon l'une quelconque des revendications 24 à 28, **caractérisé en ce que** ladite zéolite est un aluminosilicate cristallin et/ou un aluminosilicate cristallin riche en silice désaluminé.

**30.** Procédé de production de nanotubes de carbone à paroi simple selon l'une quelconque des revendications 24 à 29, **caractérisé en ce que** ledit catalyseur s'écoule dans une zone réactionnelle.

**31.** Procédé de production de nanotubes de carbone à paroi simple selon l'une quelconque des revendications 24 à 30, **caractérisé en ce que** la température de chauffage est de 500 à 1500 °C et les nanotubes de carbone à paroi simple produits sont augmentés en termes de diamètre moyen proportionnellement à ladite température de chauffage.

**32.** Procédé de production de nanotubes de carbone à paroi simple selon l'une quelconque des revendications 24 à 31, **caractérisé en ce que** la pression ou la pression partielle de ladite substance organique oxygénée est de 0,01 à 1,3 kPa ; la température de chauffage est de 500 à 700 °C ; et les nanotubes de carbone à paroi simple sont produits afin d'avoir un diamètre moyen de 0,85 à 1,05 nm.

**33.** Procédé de production de nanotubes de carbone à paroi simple selon l'une quelconque des revendications 24 à 31, **caractérisé en ce que** la pression ou la pression partielle de ladite substance organique oxygénée est de 0,01 à 2,7 kPa ; la température de chauffage est de 700 à 800 °C ; et les nanotubes de carbone à paroi simple sont produits afin d'avoir un diamètre moyen de 0,9 à 1,2 nm.

**34.** Procédé de production de nanotubes de carbone à paroi simple selon l'une quelconque des revendications 24 à 31, **caractérisé en ce que** la pression ou la pression partielle de ladite substance organique oxygénée est de 0,01 à 6,7 kPa ; la température de chauffage est de 800 à 1000 °C ; et les nanotubes de carbone à paroi simple sont produits afin d'avoir un diamètre moyen de 0,95 à 1,3 nm.

**35.** Procédé de production de nanotubes de carbone à paroi simple selon l'une quelconque des revendications 24 à 34, **caractérisé en ce qu'**un diamètre moyen desdits nanotubes de carbone à paroi simple mesuré par la mesure de la diffusion Raman de résonance est de 1,80 à 1,30 nm.

**36.** Composition contenant des nanotubes de carbone à paroi simple qui satisfait aux conditions mentionnées ci-dessous :

a) lorsque la composition contenant des nanotubes de carbone à paroi simple produits ci-dessus est analysée thermiquement à une vitesse d'augmentation de température de 5 °C/min, une position de pic d'une courbe différentielle linéaire de diminution de poids par cuisson est obtenue à 500 °C ou plus, et la largeur de demi-valeur du pic est inférieure à 170 °C ;

b) lorsque la composition est observée par un microscope électronique à transmission de grossissement $10^6$, des nanotubes de carbone à paroi simple sont observés ;

c) lorsque la composition contenant des nanotubes de carbone à paroi simple est observée par la mesure de la diffusion Raman de résonance à une longueur d'onde d'excitation de 488 nm :

1) une bande G est observée autour de 1590 cm$^{-1}$ et ladite bande est divisée ;

2) une hauteur de pic autour de 1350 cm$^{-1}$, bande D, est d'un tiers ou moins d'une hauteur de pic autour de 1590 cm$^{-1}$.

**37.** Composition contenant des nanotubes de carbone à paroi simple selon la revendication 36, **caractérisée en ce que** le pic maximal entre 150 et 300 cm$^{-1}$ est présent à 258 $\pm$ 5 cm$^{-1}$ lorsque la composition contenant des nanotubes de carbone à paroi simple est observée par la mesure de la diffusion Raman de résonance à une longueur d'onde d'excitation de 488 nm.

**38.** Composition contenant des nanotubes de carbone à paroi simple selon l'une quelconque des revendications 36 à 37, **caractérisée en ce que** le pic maximal et le second pic maximal entre 150 et 300 cm$^{-1}$ sont respectivement obtenus aux positions 201 $\pm$ 5 cm$^{-1}$ et 258 $\pm$ 5 cm$^{-1}$, lorsque la composition contenant des nanotubes de carbone à paroi simple est observée par la mesure de la diffusion Raman de résonance à une longueur d'onde d'excitation de 488 nm.

**39.** Composition contenant des nanotubes de carbone à paroi simple selon l'une quelconque des revendications 36 à 38, **caractérisée en ce que** le pic maximal entre 150 et 300 cm$^{-1}$ est présent au niveau de la position de 193 $\pm$ 5 cm$^{-1}$, lorsque la composition contenant des nanotubes de carbone à paroi simple est observée par la mesure de la diffusion Raman de résonance à une longueur d'onde d'excitation de 633 nm.

**40.** Composition contenant des nanotubes de carbone à paroi simple selon l'une quelconque des revendications 36 à 39, **caractérisée en ce que** le pic maximal entre 150 et 300 cm$^{-1}$ est présent au niveau de la position de 280 $\pm$ 5 cm$^{-1}$, lorsque la composition contenant des nanotubes de carbone à paroi simple est observée par la mesure de la diffusion Raman de résonance à une longueur d'onde d'excitation de 633 nm.

## Fig.1

Fig.2

Fig.3

50 nm

# Fig.4

## Fig.5

## Fig.6

## Fig.7

## Fig.8

## Fig.9

## Fig.10

Fig.11

Fig.12

## Fig.13

## Fig.14

Fig.15

Fig.16

## Fig.17

Fig.18

Fig.19

Fig.20

Fig.21

Fig.22

## Fig.23

# Fig.24

FeCo 2.5wt, 10 Torr, Ar/H2

# Fig.25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Chemical Physics Letters,* 1996, vol. 260, 471-475
- **W. M. MEIER ; D. H. OLSON ; CH. BAERLOCHER.** *Zeolites,* 1996, vol. 17 (1/2

- *Chemical Physics Letters,* 1999, vol. 303, 117-124